# EUROPEAN PATENT SPECIFICATION

(11) **EP 4 331 938 B1**
(45) Date of publication and mention of the grant of the patent: **24.12.2025**
(21) Application number: 22810460.0
(22) Date of filing: 19.05.2022
(51) Int. Cl.: B60Q 1/50, G08G 1/005, B60W 60/00

(54) **CONTROL METHOD AND APPARATUS**
STEUERUNGSVERFAHREN UND -VORRICHTUNG
PROCÉDÉ ET APPAREIL DE COMMANDE

(30) Priority: 25.05.2021 CN 202110574297
(43) Date of publication of application: 06.03.2024
(73) Proprietor: Shenzhen Yinwang Intelligent Technologies Co., Ltd., Shenzhen, Guangdong 518110 (CN)
(72) Inventor: LIU, Hang, Shenzhen, Guangdong 518129 (CN); SUI, Linlin, Shenzhen, Guangdong 518129 (CN); XIA, Yuan, Shenzhen, Guangdong 518129 (CN)
(74) Representative: Pfenning, Meinig & Partner mbB
(86) International application number: PCT/CN2022/093988
(87) International publication number: WO 2022/247733

(56) References cited:
- EP-A1- 3 650 295
- CN-A- 106 428 000
- CN-A- 109 455 180
- CN-A- 110 077 314
- CN-A- 111 540 222
- CN-A- 112 585 032
- CN-B- 109 969 172
- DE-A1- 102018 212 056
- DE-A1- 102019 134 048
- FR-A1- 3 030 396
- JP-A- 2020 152 246
- US-A1- 2017 010 679
- US-A1- 2017 240 098
- US-A1- 2017 240 098
- US-A1- 2018 261 081
- US-A1- 2020 223 352
- US-A1- 2020 250 553
- US-A1- 2020 290 643
- US-A1- 2020 342 757
- US-A1- 2021 114 514

## Description

### TECHNICAL FIELD

This application relates to the field of self-driving technologies, and in particular, to a control method and apparatus.

### BACKGROUND

During vehicle driving, road participant intention determining and prediction performed by a self-driving system is a basis of route planning of the self-driving system, and is also an important condition related to road safety.

Generally, when a road participant includes a pedestrian, the self-driving system may predict an intention of the pedestrian based on a movement direction of the pedestrian and the like. For example, the self-driving system may predict, based on the movement direction of the pedestrian, the intention of the pedestrian by estimating a movement track of the pedestrian according to a machine learning algorithm.

However, in the foregoing prediction method based on movement of the pedestrian, a prediction result of the intention of the pedestrian may be inaccurate, and consequently driving safety is reduced.
EP 3 650 295 A1 discloses a method and an apparatus for controlling an autonomous vehicle. The method includes: sending, in response to determining that a pedestrian is in a first target area, behavior prompt information representing prompting the pedestrian to make a corresponding behavior; determining whether a deceleration condition matching the behavior prompt information is satisfied based on acquired behavior information of the pedestrian; and sending control information for reducing a moving speed of the autonomous vehicle, in response to determining that the deceleration condition is satisfied and determining that a speed of the autonomous vehicle is greater than a preset deceleration threshold.
DE 10 2018 2122056 A1 discloses a vehicle having at least one projection device for projecting information onto an image area in its surroundings and at least one detector for optical detection of at least one interaction with the image area by an object located in the vicinity. The vehicle is configured to automatically carry out at least one process as a function of at least one interaction.

### SUMMARY

The invention is defined by the independent claims and advantageous embodiments are defined by the dependent claims. Embodiments of this application provide a control method and apparatus, applied to the field of self-driving technologies. The method includes: controlling a target device in a vehicle to display first request information in a target area. Because the first request information is used to request a pedestrian to perform a target action, and the target action is used to express a road participation intention of the pedestrian, a driving policy of the vehicle is determined by recognizing an action performed by the pedestrian based on a recognition result. In this way, even without participation of a driver, the vehicle may query the road participation intention of the pedestrian by using the first request information, so that in a self-driving scenario, the vehicle can implement intention interaction with the pedestrian, to obtain an accurate road participation intention of the pedestrian, and obtain an appropriate driving policy. This improves driving safety.

According to a first aspect, an embodiment of this invention provides a control method. The method includes, amongst others,: controlling a target device in a vehicle to display first request information in a target area, where the first request information is used to request a pedestrian to perform a target action, the target action is used to express a road participation intention of the pedestrian, and the target area is within a visible range of the pedestrian; recognizing an action performed by the pedestrian; and determining a driving policy of the vehicle based on a recognition result. In this way, even without participation of a driver, the vehicle may query the road participation intention of the pedestrian by using the first request information, so that in a self-driving scenario, the vehicle can implement intention interaction with the pedestrian, to obtain an accurate road participation intention of the pedestrian, and obtain an appropriate driving policy. This improves driving safety.

In a possible implementation, that the first request information is used to request a pedestrian to perform a target action includes: the first request information includes indication information used to indicate an expected action, and the expected action is associated with the road participation intention; and the determining a driving policy of the vehicle based on a recognition result includes: determining the driving policy of the vehicle based on whether the action performed by the pedestrian is the expected action. In this way, the vehicle indicates the pedestrian to perform the expected action, so that the driving policy of the vehicle can be determined based on the action performed by the pedestrian. This improves driving safety.

In a possible implementation, the expected action includes a first expected action and a second expected action, the first expected action is associated with a first road participation intention of the pedestrian, and the second expected action is associated with a second road participation intention of the pedestrian; and the determining a driving policy of the vehicle based on a recognition result includes: determining the driving policy of the vehicle based on whether the action performed by the pedestrian is the first expected action or the second expected action. In this way, the driving policy of the vehicle may be determined based on whether the action performed by the pedestrian is the first expected action or the second expected action. This improves driving safety.

According to the claimed invention, the first request information is used to request a pedestrian to perform a target action includes: the first request information includes indication information used to indicate a plurality of expected actions, and the plurality of expected actions are associated with a plurality of road participation intentions; and the method further includes: controlling, based on that the action performed by the pedestrian is not any one of the plurality of expected actions, the target device in the vehicle to display second request information in the target area, where the second request information is used to indicate the pedestrian to perform a first road participation behavior. In this way, the pedestrian is directly notified of the first road participation behavior that needs to be performed. This effectively reduces an invalid waiting time and increases road passing efficiency.

In a possible implementation, the determining a driving policy of the vehicle based on a recognition result includes: determining the driving policy of the vehicle based on the first road participation behavior performed by the pedestrian. In this way, the vehicle can implement intention interaction with the pedestrian. This improves driving safety.

In a possible implementation, the second request information includes one or more of text information, static graph information, video information, or dynamic graph information.

In a possible implementation, the first request information includes one or more of text information, static graph information, video information, or dynamic graph information.

In a possible implementation, the target device is a projection system, and the target area is an area outside the vehicle.

In a possible implementation, the target area is the ground, and the controlling a target device in a vehicle to display first request information in a target area includes: when the ground meets a projection condition, controlling the projection system to project the first request information on the ground. In this way, the vehicle projects the first request information on the ground, so that the pedestrian can notice the first request information, and the pedestrian can express the road participation intention of the pedestrian to the vehicle, so that the vehicle implements intention interaction with the pedestrian. This improves driving safety.

In a possible implementation, the target device is a display device, and the target area is a display; and the controlling a target device in a vehicle to display first request information in a target area includes: controlling the display device to display the first request information on the display. In this way, the vehicle displays the first request information on the display, so that the pedestrian can notice the first request information, and the pedestrian can express the road participation intention of the pedestrian to the vehicle, so that the vehicle implements intention interaction with the pedestrian. This improves driving safety.

According to a second aspect, an embodiment of this invention provides a control apparatus. The apparatus may be configured to perform the operations in any one of the first aspect or the possible implementations of the first aspect. For example, the apparatus may include a module or a unit that is configured to perform each operation in any one of the first aspect or the possible implementations of the first aspect. For example, the apparatus includes a control unit, a recognition unit, and a processing unit.

According to the invention, the control unit is configured to control a target device in a vehicle to display first request information in a target area, where the first request information is used to request a pedestrian to perform a target action, the target action is used to express a road participation intention of the pedestrian, and the target area is within a visible range of the pedestrian; the recognition unit is configured to recognize the action performed by the pedestrian; and the processing unit is configured to determine a driving policy of the vehicle based on a recognition result.

In a possible implementation, the first request information includes indication information used to indicate an expected action, and the expected action is associated with the road participation intention; and the processing unit is specifically configured to determine the driving policy of the vehicle based on whether the action performed by the pedestrian is the expected action.

In a possible implementation, the expected action includes a first expected action and a second expected action, the first expected action is associated with a first road participation intention of the pedestrian, and the second expected action is associated with a second road participation intention of the pedestrian; and the processing unit is specifically configured to determine the driving policy of the vehicle based on whether the action performed by the pedestrian is the first expected action or the second expected action.

According to the invention, the first request information includes indication information used to indicate a plurality of expected actions, and the plurality of expected actions are associated with a plurality of road participation intentions; and the control unit is further configured to control, based on that the action performed by the pedestrian is not any one of the plurality of expected actions, the target device in the vehicle to display second request information in the target area, where the second request information is used to indicate the pedestrian to perform a first road participation behavior.

In a possible implementation, the processing unit is specifically configured to determine the driving policy of the vehicle based on the first road participation behavior performed by the pedestrian.

In a possible implementation, the second request information includes one or more of text information, static graphic information, video information, or dynamic graphic information.

In a possible implementation, the first request information includes one or more of text information, static graph information, video information, or dynamic graph information.

In a possible implementation, the target device is a projection system, and the target area is an area outside the vehicle.

In a possible implementation, the target area is the ground, and the control unit is specifically configured to: when the ground meets a projection condition, control the projection system to project the first request information on the ground.

In a possible implementation, the target device is a display device, and the target area is a display; and the control unit is specifically configured to control the display device to display the first request information on the display.

According to a non-claimed third aspect, an embodiment of this application provides a control apparatus. The apparatus includes a memory and a processor. The memory stores computer program instructions, and the processor runs the computer program instructions, to implement the method described in the first aspect and the possible implementations of the first aspect.

According to a non-claimed fourth aspect, an embodiment of this application provides a vehicle. The vehicle includes the apparatus described in the second aspect of the claims and the possible implementations of the second aspect.

In a possible implementation, the vehicle further includes a perception system and a target device, where the target device is a projection system or a display device.

According to a fifth aspect, an embodiment of this application provides a computer-readable storage medium. The computer-readable storage medium stores a computer program or instructions, and when the computer program or the instructions is/are run on a computer, the computer is enabled to perform the method described in the first aspect and the possible implementations of the first aspect.

According to a non-claimed sixth aspect, an embodiment of this application provides a computer program product. When the computer program product is run on a processor, a control apparatus is enabled to perform the method described in the first aspect and the possible implementations of the first aspect.

According to a non-claimed seventh aspect, an embodiment of this application provides a control system. The system includes the apparatus described in the second aspect and the possible implementations of the second aspect.

According to a non-claimed eighth aspect, this application provides a chip or a chip system. The chip or the chip system includes at least one processor and a communication interface, the communication interface and the at least one processor are interconnected by using a line, and the at least one processor is configured to run a computer program or instructions, to implement the method described in the first aspect and the possible implementations of the first aspect. The communication interface in the chip may be an input/output interface, a pin, a circuit, or the like.

In a possible implementation, the chip or the chip system described in this application further includes at least one memory, and the at least one memory stores instructions. The memory may be a storage unit inside the chip, for example, a register or a cache, or may be a storage unit (for example, a read-only memory or a random access memory) of the chip.

It should be understood that the second aspect to the eighth aspect of this application correspond to the technical solutions of the first aspect of this application, and beneficial effects achieved by the aspects and the corresponding feasible implementations are similar. Details are not described again.

### BRIEF DESCRIPTION OF DRAWINGS

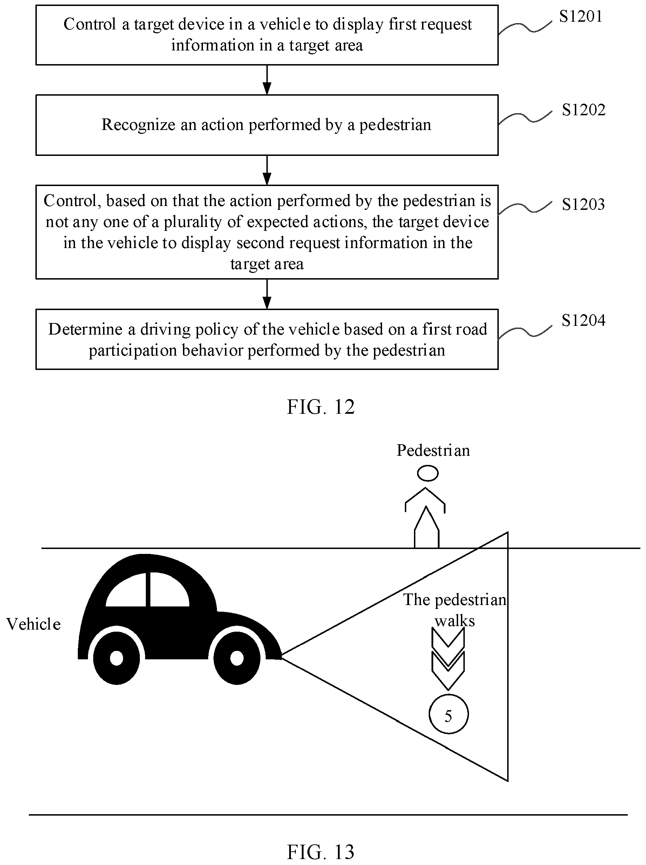

Various embodiments according to the application and that are useful for understanding the claimed invention are discussed below with reference to the Figures. An embodiment of the invention as defined by the independent claims is also included in the below description and is e.g. based on the embodiment of Figures 12 & 13.
FIG. 1 is a schematic diagram of a pedestrian crossing a road;
FIG. 2 is a schematic diagram of a vehicle intention reminder that is not part of the invention;
FIG. 3 is a schematic diagram of another vehicle intention reminder that is not part of the invention;
FIG. 4 is a schematic diagram of an application scenario;
FIG. 5 is a schematic diagram of an in-vehicle projection interaction system;
FIG. 6 is a possible block diagram of functions of a vehicle;
FIG. 7 is a schematic diagram of a structure of a computer system;
FIG. 8 is a schematic flowchart of a control method according to a part of the invention ;
FIG. 9 is a schematic diagram of first request information according to the invention;
FIG. 10 is a schematic flowchart of a control method according to an embodiment of the invention;
FIG. 11 is a schematic diagram of intention interaction according to an embodiment of the invention;
FIG. 12 is a schematic flowchart of a control method according to an embodiment of the invention;
FIG. 13 is a schematic diagram of second request information according to an embodiment of the invention;
FIG. 14 is a schematic diagram of second request information according to an embodiment of the invention;
FIG. 15 is a schematic diagram of intention interaction according to an embodiment of the invention;
FIG. 16 is a schematic flowchart of a control method according to an embodiment of the invention;
FIG. 17 is a schematic diagram of a structure of a control apparatus according to an embodiment of the invention;
FIG. 18 is a schematic diagram of a structure of another control apparatus according to an embodiment of the invention; and
FIG. 19 is a schematic diagram of a structure of a chip.

### DESCRIPTION OF EMBODIMENTS

To clearly describe the technical solutions in embodiments of this application, words such as "first" and "second" are used in embodiments of this application to distinguish between same items or similar items that have basically a same function or purpose. For example, a first value and a second value are merely intended to distinguish between different values, but not to limit a sequential order thereof. A person skilled in the art may understand that the terms such as "first" and "second" do not limit a quantity or an execution sequence, and the terms such as "first" and "second" do not indicate a definite difference.

It should be noted that, in embodiments of this application, the term such as "example" or "for example" is used to represent giving an example, an illustration, or descriptions. Any embodiment or design scheme described as "an example" or "for example" in this application should not be construed as being more preferable or advantageous than other embodiments or design schemes. Exactly, use of the word such as "example" or "for example" is intended to present a relative concept in a specific manner.

In embodiments of this application, "at least one" means one or more, and "a plurality of" means two or more. The term "and/or" describes an association relationship between associated objects, and indicates that three relationships may exist. For example, A and/or B may indicate the following three cases: A exists alone, both A and B exist, and B exists alone, where A and B may be singular or plural. The character "/" generally indicates an "or" relationship between the associated objects. At least one of the following items (pieces) or a similar expression thereof indicates any combination of these items, including any combination of a single item (piece) or a plurality of items (pieces). For example, at least one item (piece) of a, b, or c may indicate: a, b, c, a and b, a and c, b and c, or a, b, and c, where a, b, and c may be singular or plural.

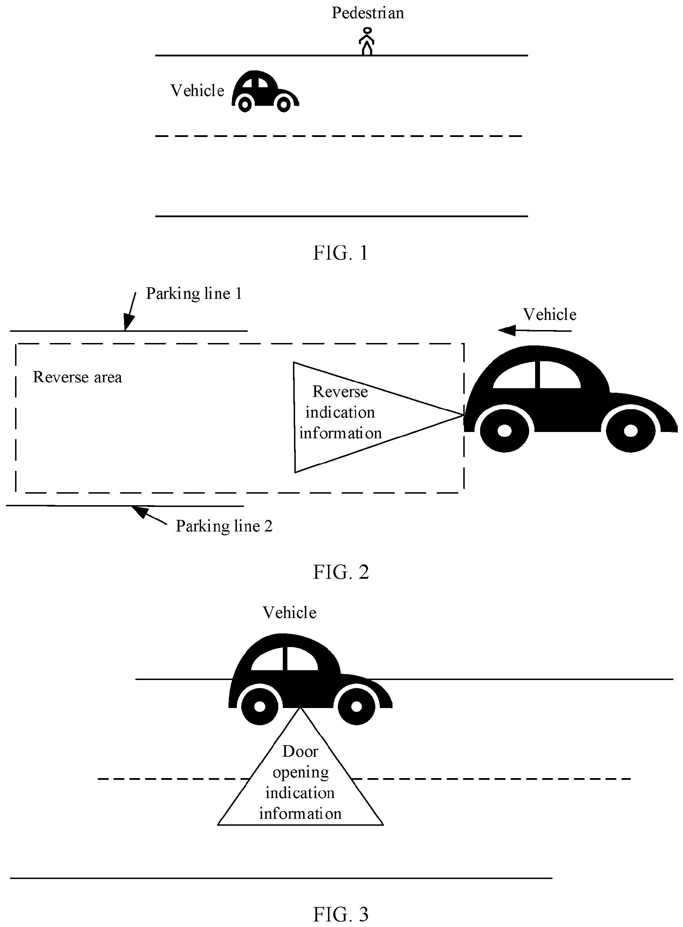

During vehicle driving, a scenario in which a road participant crosses a road may occur. The road participant includes a pedestrian, a bicycle, and the like. For example, the road participant is a pedestrian. FIG. 1 is a schematic diagram of a pedestrian crossing road. As shown in FIG. 1, when the pedestrian crosses the road, two cases may occur, and an intention of the vehicle or the pedestrian may be determined based on the two cases.

Case 1: A driver stops the vehicle to let the pedestrian pass. Therefore, the intention of the vehicle is to stop, and the intention of the pedestrian is to pass.

Case 2: A driver spots the pedestrian that is crossing the road, and the driver stops the vehicle. The pedestrian also spots the vehicle that is driving on the road, and the pedestrian also stops. When the vehicle or the pedestrian stops at the same time, the driver or the pedestrian may perform intention interaction by using a simple gesture or action. In this way, the party who is given a way can quickly cross the road. For example, if the pedestrian indicates, by using a gesture, that the vehicle can continue to move forward, the intention of the vehicle is to continue to move forward, and the intention of the pedestrian is to stop.

However, in a self-driving system, without the participation of a driver, intention interaction between the self-driving system and a pedestrian cannot be performed by using a gesture or an action as what is performed between the driver and the pedestrian. Therefore, in intention determining and prediction of road traffic participants, it is particularly difficult to determine and predict an intention of a pedestrian.

In a possible implementation, the self-driving system may predict an intention of a road participant based on information such as a movement direction, a speed, and a road topology of the road participant. For example, the self-driving system may predict, based on information such as a movement direction, a speed, and a road topology of a road participant, an intention of the pedestrian by estimating a movement track of the road participant according to a machine learning algorithm.

However, the foregoing road participant movement-based prediction method is applicable to a case in which a road participant has a movement track and a movement trend, and an intention of a static road participant cannot be predicted. If the intention of the static road participant is determined according to a prediction algorithm, it is possible that the road participant movement-based prediction algorithm cannot obtain an effective input, and therefore, the intention of the road participant cannot be accurately predicted and determined. In addition, in the foregoing road participant movement-based prediction method, a prediction result of the intention of the pedestrian may be inaccurate, and consequently driving safety is reduced. In addition, when the prediction result of the intention of the pedestrian is inaccurate, a false judgment may also occur, causing a danger and even causing a traffic accident.

In a possible implementation, in a scenario in which a self-driving vehicle is parked in a parking space, the self-driving system may use a light signal projection apparatus to emit warning information on the ground based on a vehicle light technology, to remind a road participant. The light signal projection apparatus includes a light source, a translucent mirror, and a reflector. A light beam divergent by the light source is reflected by the reflector, and then passes through different shapes, different symbols, different patterns, or different texts designed on the translucent mirror, so that information for reminding the road participant may be displayed on the ground.

For example, FIG. 2 is a schematic diagram of a vehicle intention reminder in a possible design. As shown in FIG. 2, in a vehicle reverse stall parking scenario, warning information is reverse indication information. The self-driving system uses a light signal projection apparatus to project the reverse indication information in a reverse area at a rear of the vehicle, to remind a road participant that is behind the vehicle or that is passing the rear of the vehicle. The light signal projection apparatus may be installed at the rear of the vehicle. The reverse area may be a rectangular area formed by the rear of the vehicle, a parking line 1, and a parking line 1. The reverse indication information may be a text, a shape, a symbol, or the like. The text, the shape, or the symbol is used to indicate that the vehicle is being reversed or is to be reversed.

For example, FIG. 3 is a schematic diagram of another vehicle intention reminder in a possible design. As shown in FIG. 3, in a scenario in which a vehicle is still, for example, when the vehicle is parked on a roadside, warning information is door opening indication information. The self-driving system projects the door opening indication information to the ground by using a light signal projection apparatus, to remind a road participant beside a vehicle. The light signal projection apparatus may be installed on a vehicle door, and the door opening indication information may be a text, a symbol, a shape, or the like. The text, the symbol, or the shape is used to indicate that the vehicle door is being opened or is about to be opened.

However, based on the light signal projection apparatus, the self-driving system implements a unidirectional warning reminder for the road participant, and the road participant cannot be ensured to notice the warning information, understand the warning information, perform an action based on the warning information, or the like. In this way, the self-driving system cannot accurately determine an intention of the road participant.

Based on this, embodiments of this application provide a control method and apparatus, applied to the field of self-driving technologies. The method includes: controlling a display device in a vehicle to display first request information in a target area. Because the first request information is used to request a pedestrian to perform a target action, and the target action is used to express a road participation intention of the pedestrian, a driving policy of the vehicle may be determined by recognizing an action performed by the pedestrian based on a recognition result. In this way, even without participation of a driver, the vehicle may query the road participation intention of the pedestrian by using the first request information, so that in a self-driving scenario, the vehicle can implement intention interaction with the pedestrian and obtain an appropriate driving policy. This improves driving safety.

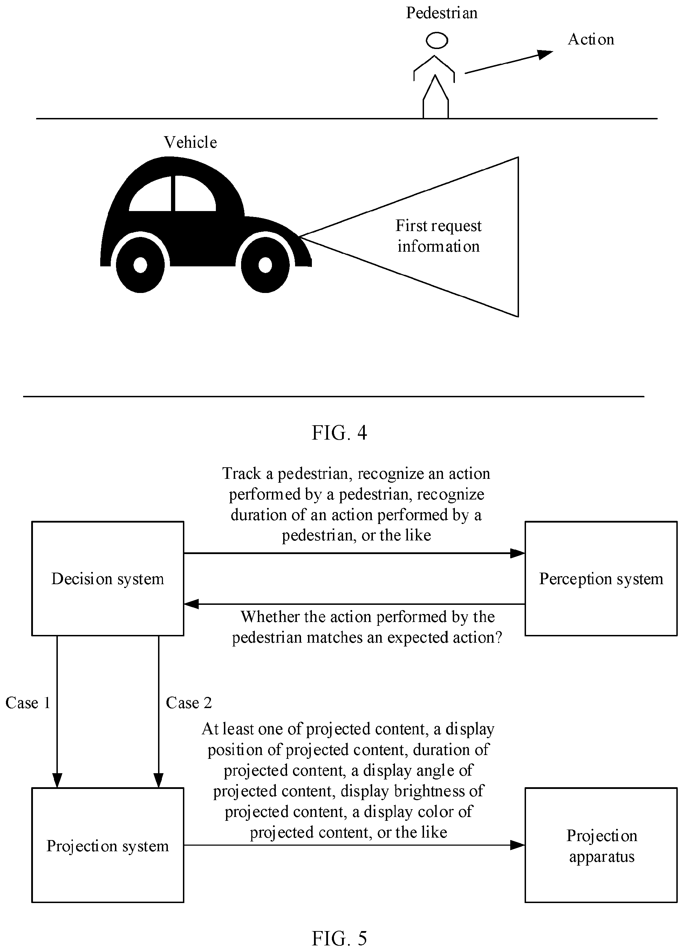

The method in this embodiment of this application may be applied to a scenario in which a pedestrian intends to cross a road or a scenario in which a pedestrian stands on a roadside. According to the method in this embodiment of this application, a self-driving vehicle may perform intention interaction with the pedestrian. For example, FIG. 4 is a schematic diagram of an application scenario according to an embodiment of this application. As shown in FIG. 4, a vehicle recognizes that a pedestrian is standing on a roadside. However, the vehicle cannot determine whether the pedestrian continues to stand on the roadside or cross the road at a next moment. Therefore, the vehicle may display the first request information on the ground, and the pedestrian may perform an action based on the first request information. In this way, even without the participation of the driver, the vehicle may understand a road participation intention of the pedestrian, and therefore the vehicle implements intention interaction with the pedestrian.

Based on the application scenario shown in FIG. 4, for example, FIG. 5 is a schematic diagram of an in-vehicle projection interaction system according to an embodiment of this application. As shown in FIG. 5, the system includes a decision system, a perception system, and a projection control system (hereinafter referred to as a projection system), and the projection system includes a projection apparatus. The system includes an interface between the decision system and the perception system, an interface between the decision system and the projection system, and an interface between the projection system and the projection apparatus.

As shown in FIG. 5, the decision system may activate the projection apparatus based on information transmitted through the interface between the decision system and the perception system. In this way, the projection system may indicate the projection apparatus to project the request information based on the information transmitted through the interface between the decision system and the projection system. Further, the projection apparatus may display the request information in the target area based on the information transmitted through the interface between the projection system and the projection apparatus. The request information may include the first request information or the second request information.

The information transmitted through the interface between the decision system and the perception system may be reflected as information that is about a pedestrian and that is perceived by the perception system indicated by the decision system, where the information about the pedestrian includes but is not limited to tracking the pedestrian, recognizing an action performed by the pedestrian, recognizing duration of an action performed by the pedestrian, or the like. On the other hand, the transmitted information may be reflected as perceived action information input by the perception system for the decision system, where the perceived action information includes but is not limited to information whether an action performed by the pedestrian matches an expected action. That the action performed by the pedestrian matches the expected action may be understood as that the action performed by the pedestrian is a first expected action or a second expected action, and that the action performed by the pedestrian does not match the expected action may be understood as that the action performed by the pedestrian is not any one of a plurality of expected actions, or the pedestrian does not perform an action.

The information transmitted through the interface between the decision system and the projection system and the information transmitted through the interface between the projection system and the projection apparatus are described in the following two cases.

Case 1: When the decision system cannot recognize the intention of the pedestrian, the information transmitted through the interface between the decision system and the projection system may be reflected as request information determined by the decision system, that is, the first request information determined by the decision system. In this way, the projection system may indicate the projection apparatus based on the first request information determined by the decision system. Because the information transmitted through the interface between the projection apparatus and the projection system may be reflected as the first request information displayed in the target area, the projection apparatus may display the first request information in the target area based on the information transmitted through the interface between the projection apparatus and the projection system. The first request information includes at least one of projected content, a display position of projected content, duration of projected content, a display angle of projected content, display brightness of projected content, a display color of projected content, or the like.

Case 2: When the action performed by the pedestrian does not match the expected action, that is, the action performed by the pedestrian is not any one of the plurality of expected actions, the information transmitted through the interface between the decision system and the projection system may be reflected as switched request information determined by the decision system, that is, the second request information determined by the decision system. In this way, the projection system may indicate the projection apparatus based on the second request information determined by the decision system. Because the information transmitted through the interface between the projection apparatus and the projection system may be reflected as the second request information displayed in the target area, the projection apparatus may display the second request information in the target area based on the information transmitted through the interface between the projection apparatus and the projection system. The second request information includes but is not limited to at least one of a display position of projected content, duration of projected content, a display angle of projected content, display brightness of projected content, a display color of projected content, or the like.

It may be understood that the information transmitted through the interface between the decision system and the perception system may include an instruction instructing the perception system to perceive a pedestrian. In this way, the perception system may perceive information about the pedestrian according to the instruction. The information transmitted through the interface between the decision system and the projection system may also include an instruction for activating the projection system. In this way, the projection system may be activated according to the instruction. The information transmitted through the interface between the projection apparatus and the projection system may include an instruction instructing the projection apparatus to perform projection. In this way, the projection apparatus may project the first request information or the second request information according to the instruction.

In conclusion, the vehicle may display the first request information or the second request information in the target area by using the information transmitted through the interface between the decision system and the perception system, the information transmitted through the interface between the decision system and the projection system, and the information transmitted through the interface between the projection system and the projection apparatus, so that the perception system can recognize, based on the first request information, the action performed by the pedestrian, or the perception system can recognize, based on the second request information, a road participation behavior performed by the pedestrian, so that the decision system can determine the intention of the pedestrian, and further determine a driving policy of the vehicle.

According to the in-vehicle projection interaction system shown in FIG. 5, the vehicle and the pedestrian may exchange information with each other, so that the vehicle can determine the intention of the pedestrian, and the vehicle can further perform safe driving control and decision-making.

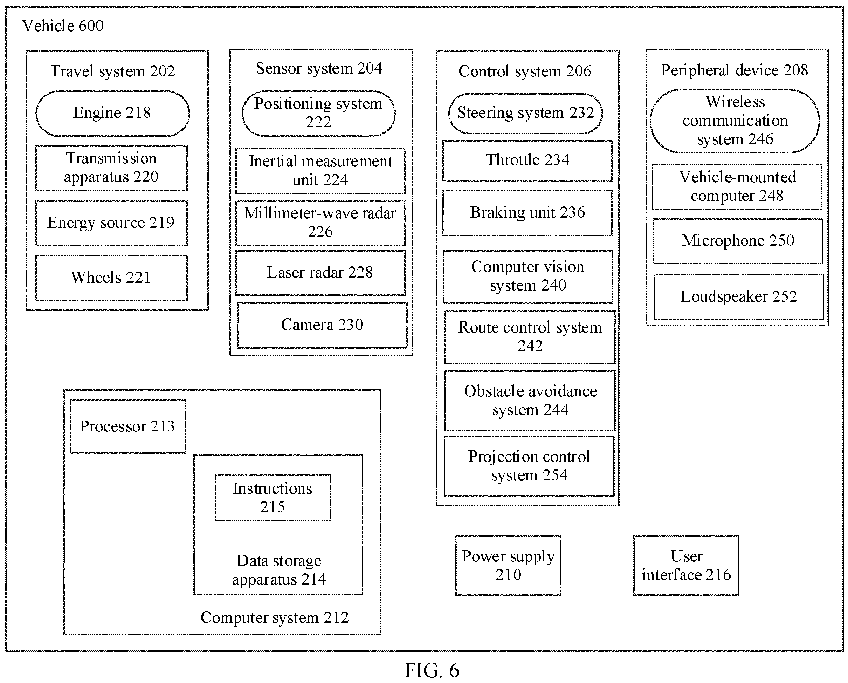

On the basis of the application scenario shown in FIG. 4, for example, FIG. 6 is a block diagram of functions of a possible vehicle 600 according to an embodiment of this application. As shown in FIG. 6, the vehicle 600 may be configured to be in a full or partial self-driving mode. The vehicle 600 may be a car, a truck, a motorcycle, a bus, a lawn mower, an entertainment vehicle, a playground vehicle, a construction device, a tram, a golf cart, a train, a handcar, or the like. This is not specifically limited in this embodiment of this application.

In a possible manner, when the vehicle 600 is in the partial self-driving mode, after the vehicle 600 determines a current status of the vehicle and a current status of a surrounding environment of the vehicle, a user operates the vehicle 600 according to the current statuses. For example, the vehicle 600 determines a possible behavior of a pedestrian in the surrounding environment. The vehicle may control, based on the possible behavior of the pedestrian, a target device in the vehicle to display first request information in a target area, and the pedestrian may perform an action based on the first request information. In this way, after the action performed by the pedestrian is recognized, the vehicle may notify the user of a road participation intention of the pedestrian by using a voice message, so that the user can perform an operation related to the road participation intention of the pedestrian on the vehicle.

In a possible manner, when the vehicle 600 is in the full self-driving mode, the vehicle 600 may automatically perform a driving-related operation. For example, the vehicle 600 determines a possible behavior of a pedestrian in the surrounding environment, and controls, based on the possible behavior of the pedestrian, a target device in the vehicle to display first request information in a target area. The vehicle recognizes an action performed by the pedestrian, and determines a road participation intention of the pedestrian based on a recognition result, so that the vehicle can automatically perform an operation related to the road participation intention of the pedestrian.

As shown in FIG. 6, the vehicle 600 includes a travel system 202, a sensor system 204, a control system 206, one or more peripheral devices 208, a computer system 212, a power supply 210, and a user interface 216. Optionally, the vehicle 600 may include more or fewer subsystems, and each subsystem may include a plurality of components. Each subsystem and component of the vehicle 600 may be interconnected in a wired or wireless manner.

In FIG. 6, the travel system 202 includes an engine 218, a transmission apparatus 220, an energy source 219, and wheels 221.

In a possible manner, the sensor system 204 includes several sensors that sense information about an environment around the vehicle 600. For example, the sensor system 204 may include a positioning system 222, an inertia measurement unit (inertial measurement unit, IMU) 224, a millimeter-wave radar 226, a laser radar 228, and a camera 230. The positioning system 222 may be a global positioning system (global positioning system, GPS), a BeiDou system, or another positioning system.

In a possible manner, the positioning system 222 may be configured to estimate a geographical location of the vehicle 600, and the IMU 224 is configured to sense a location and a change in a heading direction of the vehicle 600 based on an inertial acceleration. In some embodiments, the IMU 224 may be a combination of an accelerometer and a gyroscope.

Optionally, the sensor system 204 may further include a sensor (for example, an in-vehicle air quality monitor, a fuel gauge, and/or an engine oil thermometer) of an internal system of the monitored vehicle 600. Sensor data from one or more of these sensors may be used to detect and recognize an object and its corresponding features (for example, a position, a shape, a direction, a speed, and/or the like). The detection and recognition are key functions of the vehicle 600 for an autonomous safety operation.

In a possible manner, the millimeter-wave radar 226 may sense an object in a surrounding environment of the vehicle 600 by using a radio signal. For example, by using the millimeter-wave radar 226, the vehicle may track a pedestrian, recognize an action performed by a pedestrian, recognize duration of an action performed by a pedestrian, or the like. In some embodiments, in addition to sensing an object, the millimeter-wave radar 226 may be further configured to sense a speed and/or a heading direction of the object.

In a possible manner, the laser radar 228 may sense, by using a laser, an object in an environment in which the vehicle 600 is located. In some embodiments, the laser radar 228 may include one or more laser sources, a laser scanner, one or more detectors, and another system component.

In a possible manner, the camera 230 may be configured to capture a plurality of images of the surrounding environment of the vehicle 600. For example, the camera 230 may capture environmental data or image data around the vehicle, and the vehicle predicts a road participation intention of the pedestrian based on the environmental data or the image data, to determine whether to control the target device in the vehicle to display the first request information in the target area. The camera 230 may be a static camera or a video camera.

With reference to the system shown in FIG. 5, in FIG. 6, the sensor system may be a perception system. In this way, the pedestrian may be tracked by using the millimeter-wave radar 226 or the laser radar 228 in the perception system, or the action performed by the pedestrian may be recognized, to obtain information, that is, perceived action information, transmitted through an interface between a decision system and the perception system.

In FIG. 6, the control system 206 controls operations of the vehicle 600 and the components of the vehicle, and the control system 206 may include various components. For example, the control system 206 may include at least one of a steering system 232, a throttle 234, a braking unit 236, a computer vision system 240, a route control system 242, an obstacle avoidance system 244, and a projection control system 254. It may be understood that, in some instances, the control system 206 may additionally or alternatively include components other than those shown and described, or may reduce some of the components shown above.

In this embodiment of this application, the projection control system 254 may indicate the projection apparatus to project the first request information or the second request information.

In a possible manner, the steering system 232 may be operable to adjust the heading direction of the vehicle 600. For example, in an embodiment, the steering system may be a steering wheel system. The throttle 234 is configured to control an operating speed of the engine 218 and control a speed of the vehicle 600. The braking unit 236 is configured to control the vehicle 600 to decelerate, and the braking unit 236 may use a friction force to decelerate the wheels 221. In another embodiment, the braking unit 236 may convert kinetic energy of the wheels 221 into a current, and the braking unit 236 may further reduce a rotation speed of the wheels 221 in another form, to control the speed of the vehicle 600.

In a possible manner, the computer vision system 240 may process and analyze an image captured by the camera 230, so that the computer vision system 240 recognizes an object and/or a feature of an object in the surrounding environment of the vehicle 600. The object and/or the feature of the object may include a traffic signal, a road boundary, or an obstacle. The computer vision system 240 may use an object recognition algorithm, a structure from motion (structure from motion, SFM) algorithm, video tracking, and another computer vision technology. In some embodiments, the computer vision system 240 may be configured to map an environment, track an object, estimate a speed of an object, and the like.

In a possible manner, the route control system 242 may be configured to determine a driving route of the vehicle 600, and the obstacle avoidance system 244 may be configured to recognize, evaluate, and bypass or cross over a potential obstacle in the environment of the vehicle 600.

The vehicle 600 interacts with an external sensor, another vehicle, another computer system, or a user by using the peripheral device 208. For example, the peripheral device 208 may include a wireless communication system 246, a vehicle-mounted computer 248, a microphone 250, and a loudspeaker 252. In a possible manner, the wireless communication system 246 may wirelessly communicate with one or more devices directly or by using a communication network.

Some or all functions of the vehicle 600 are controlled by the computer system 212. The computer system 212 may include at least one processor 213, and the processor 213 executes instructions 215 stored in a data storage apparatus 214. The computer system 212 may alternatively be a plurality of computing devices that control an individual component or a subsystem of the vehicle 600 in a distributed manner.

In a possible manner, the processor 213 may be any conventional processor, for example, a commercially available central processing unit (central processing unit, CPU). Alternatively, the processor may be an application-specific integrated circuit (application-specific integrated circuit, ASIC) for specialized applications or another dedicated device with a hardware-based processor. In the aspects described herein, the processor 213 may be located far away from the vehicle and in wireless communication with the vehicle. In other aspects, some of the processes described herein may be performed by a processor arranged in a vehicle, while other processes described herein may be performed by a remote processor, including taking steps necessary to perform a single operation.

In a possible manner, the data storage apparatus 214 may include the instructions 215 (for example, program logic instructions), and the instructions 215 may be processed by the processor 213, so that the processor 213 performs various functions of the vehicle 600, where the functions include the functions described above. The data storage apparatus 214 may further include extra instructions, including instructions for sending data to, receiving data from, interacting with, and/or controlling one or more of the travel system 202, the sensor system 204, the control system 206, and the peripheral device 208.

In addition to the instructions 215, the data storage apparatus 214 may further store data, such as a road map, route information, a location, a direction, a speed, and other vehicle data of the vehicle, and other information. The information may be used by the vehicle 600 and the computer system 212 during operation of the vehicle 600 in an autonomous mode, a semi-autonomous mode, and/or a manual mode.

In a possible manner, the user interface 216 is configured to provide information for a user of the vehicle 600 or receive information from the user of the vehicle 600. Optionally, the user interface 216 may include one or more input/output devices in a set of peripheral devices 208, for example, the wireless communication system 246, the vehicle-mounted computer 248, the microphone 250, and the loudspeaker 252.

The computer system 212 may control a function of the vehicle 600 based on inputs received from various subsystems (for example, the travel system 202, the sensor system 204, and the control system 206) and from the user interface 226. For example, the computer system 212 may utilize an input from the control system 206 to control the steering system 232 to avoid an obstacle detected by the sensor system 204 and the obstacle avoidance system 244. In some embodiments, the computer system 212 may provide control over many aspects of the vehicle 600 and the subsystems of the vehicle.

Optionally, one or more of the foregoing components may be installed separately from or associated with the vehicle 600. For example, the data storage apparatus 214 may be partially or completely separated from the vehicle 600. The foregoing components may be coupled together in a wired and/or wireless manner.

Optionally, the foregoing component is merely an example. In an actual application, components in the foregoing modules may be added or removed according to an actual requirement. FIG. 6 should not be construed as a limitation on this embodiment of this application.

In addition to providing instructions for adjusting a speed or a driving route of the self-driving vehicle, the computing device may further provide instructions for modifying a steering angle of the vehicle 600, so that the self-driving vehicle follows a specific track and/or keeps a safe horizontal and vertical distance from an obstacle (for example, a vehicle in an adjacent lane on a road) near the self-driving vehicle.

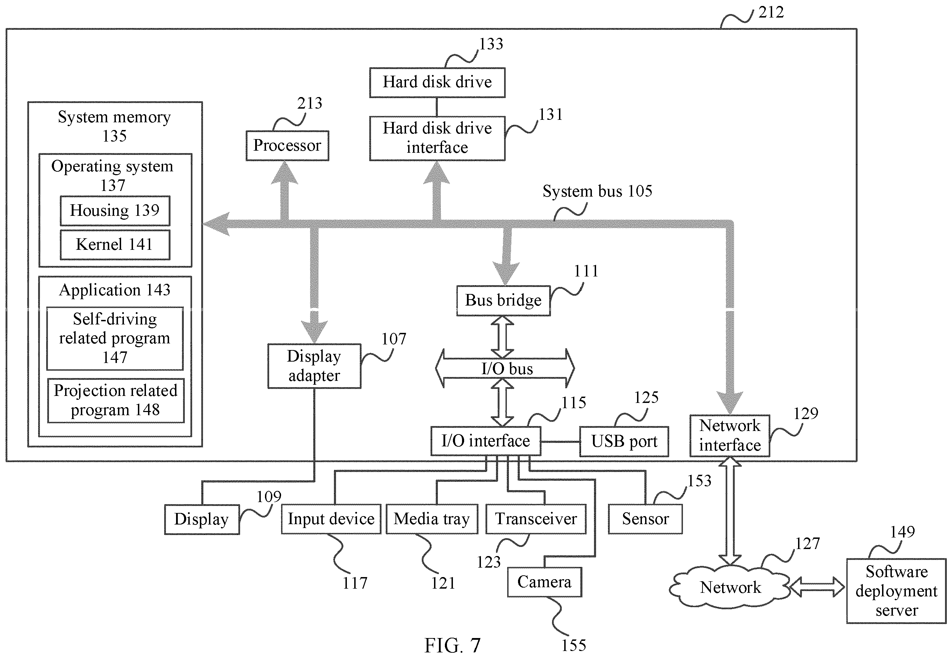

To better describe the computer system 212 shown in FIG. 6, for example, FIG. 7 is a schematic diagram of a structure of a computer system 212 according to an embodiment of this application.

As shown in FIG. 7, the computer system 212 includes at least one of a processor 213, a video adapter (video adapter) 107, a transceiver 123, a camera 155, a universal serial bus (universal serial bus, USB) port 125, and the like. The transceiver 123 may send and/or receive a radio communication signal, and the camera 155 may capture a static digital video image and a dynamic digital video image.

In a possible manner, the processor 213 is coupled to a system bus 105, the system bus 105 is coupled to an input/output (input/output, I/O) bus by using a bus bridge 111, the I/O bus is coupled to an I/O interface 115, and the I/O interface 115 may communicate with a plurality of I/O devices. For example, the I/O device may be an input device 117 (for example, a keyboard, a mouse, or a touchscreen) or a media tray (media tray) 121 (for example, a compact disc read-only memory (compact disc read-only memory, CD-ROM), or a multimedia interface). Optionally, an interface connected to the I/O interface 115 may be a universal serial bus (universal serial bus, USB) port.

In a possible manner, the processor 213 may be one or more processors, and each processor may include one or more processor cores. The processor 113 may be any conventional processor, including a reduced instruction set computer (reduced instruction set computing, RISC), a complex instruction set computer (complex instruction set computing, CISC), or a combination thereof.

Optionally, the processor may be a dedicated apparatus such as an application-specific integrated circuit (application-specific integrated circuit, ASIC), or the processor 213 may be a neural processing unit or a combination of a neural processing unit and the foregoing conventional processor.

In a possible manner, the computer system 212 may communicate with a software deployment server 149 through a network interface 129. For example, the network interface 129 may be a hardware network interface (for example, a network adapter). A network 127 may be an external network (for example, the Internet) or an internal network (for example, the Ethernet or a virtual private network (virtual private network, VPN)). Optionally, the network 127 may alternatively be a wireless network (for example, a wireless-fidelity (wireless-fidelity, Wi-Fi) network or a cellular network).

In a possible manner, an application 143 includes a self-driving related program 147 and a projection related program 148. For example, the self-driving related program 147 may include a program for managing interaction between the self-driving vehicle and an obstacle on the road, a program for controlling a route or a speed of the self-driving vehicle, a program for controlling interaction between the self-driving vehicle and another self-driving vehicle on the road, and the like. For example, the projection related program 148 may include a program for projection of the first request information or the second request information.

It may be understood that after the vehicle displays the first request information or the second request information in the target area by using the projection related program 148, the vehicle may further control a route, a speed, or the like of the vehicle by using the self-driving related program 147.

The application 143 may exist on a system of the software deployment server (deploying server) 149. In an embodiment, when the application 143 needs to be executed, the computer system may download the application 143 from the software deployment server 149.

The sensor 153 is associated with the computer system 212, and the sensor 153 is configured to detect an environment around the computer system 212. For example, the sensor 153 may detect an object such as an animal, a car, an obstacle, or a sidewalk. Further, the sensor may further detect an environment around the object such as the animal, the car, the obstacle, or the sidewalk. For example, the environment may be a weather condition around the animal, brightness of the environment around the animal, or another animal that appears around the animal. Optionally, if the computer system 212 is installed on a self-driving car, the sensor may be a camera, an infrared sensor, a chemical detector, a microphone, or the like.

With reference to the system shown in FIG. 5, the processor 213 shown in FIG. 7 may be a decision system, or the processor 213 includes a decision system. In this way, the vehicle may implement intention interaction with a pedestrian by using the processor 213.

With reference to the system shown in FIG. 5, the sensor 153 shown in FIG. 7 may be a perception system. The vehicle may track a pedestrian, recognize an action performed by a pedestrian, recognize duration of an action performed by a pedestrian, or the like by using the sensor 153. In this way, the vehicle may obtain information transmitted through an interface between the processor 213 and the sensor 153. In other words, the vehicle obtains information transmitted through an interface between the decision system and the perception system.

It should be noted that the following described steps may be performed by a vehicle, a chip in a vehicle, a module in a vehicle, or the like. For ease of description, the following specific embodiments are described by using an example in which a module in a vehicle (referred to as a first module subsequently) performs the steps. The first module may be a multi-domain controller (multi-domain controller, MDC) or the like. It may be understood that specific content of the first module may also be set based on an actual application scenario. This is not limited in this embodiment of this application.

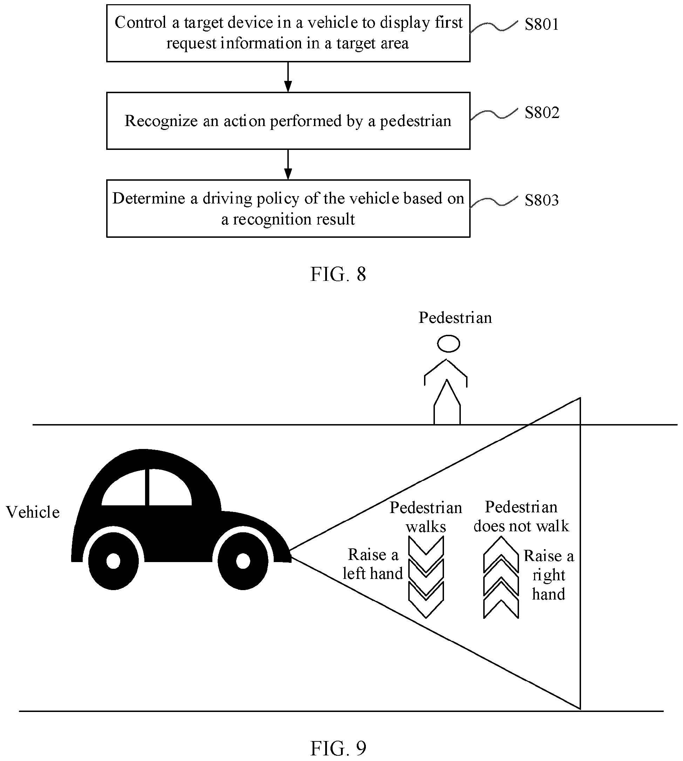

For example, FIG. 8 is a schematic flowchart of a control method according to an embodiment of this application. As shown in FIG. 8, the method may include the following steps.

S801: A first module controls a target device in a vehicle to display first request information in a target area.

In this embodiment of this application, the target device may be a device pre-installed in the vehicle by a manufacturer, or may be a device installed in the vehicle by a user. The first module controls the target device in the vehicle to display the first request information in the target area. The control process may be automatically triggered or may be manually triggered. In this way, the vehicle may query a road participation intention of a pedestrian based on the first request information. It may be understood that an installation position of the target device may be set based on an actual application scenario. This is not limited in this embodiment of this application.

In this embodiment of this application, the target area is within a visible range of the pedestrian. For example, the target area is a ground area between the vehicle and the pedestrian. In this way, the first module controls the target device in the vehicle to display the first request information in the target area, so that the pedestrian can know, in the target area, the first request information displayed by the vehicle, and the pedestrian can perform, based on the first request information, an action related to the road participation intention of the pedestrian, so that the pedestrian expresses the road participation intention of the pedestrian. It may be understood that specific content of the target area may alternatively be specified based on an actual application scenario. This is not limited in this embodiment of this application.

In this embodiment of this application, the first request information is used to request the pedestrian to perform a target action. Because the target action is used to express the road participation intention of the pedestrian, the first module may learn, based on the first request information, of a road participation intention of the pedestrian at a next moment, that is, whether the pedestrian continues to walk or stops. The target action may be a preset action, and the action is known to both the vehicle and the pedestrian. This ensures that after the pedestrian performs the action, the vehicle can understand the road participation intention represented by the action performed by the pedestrian. For example, if the pedestrian holds a left hand, it means that the pedestrian walks at a next moment, and if the pedestrian holds a right hand, it means that the pedestrian stops at a next moment.

The pedestrian may be a pedestrian walking on a roadside, a pedestrian intending to cross a road, a pedestrian riding a bicycle, or the like. It may be understood that specific content of the target action may alternatively be specified based on an actual application scenario. This is not limited in this embodiment of this application.

In this embodiment of this application, the first request information may include one or more of text information, static graph information, video information, or dynamic graph information. It may be understood that specific content of the first request information may alternatively be specified based on an actual application scenario. This is not limited in this embodiment of this application.

The text information is a text indicating that the pedestrian walks or does not walk, and a target action requested to be performed by the pedestrian is also displayed next to the text indicating that the pedestrian walks or does not walk. For example, to raise a left hand is displayed next to the text indicating that the pedestrian walks, and to raise a right hand is displayed next to the text indicating that the pedestrian does not walk.

The static graph information is a static graph indicating that a pedestrian walks or a pedestrian does not walk. For example, FIG. 9 is a schematic diagram of first request information according to an embodiment of this application. As shown in FIG. 9, in front of a pedestrian, a static graph indicating that the pedestrian walks is an arrow symbol in a forward direction, a static graph indicating that the pedestrian does not walk is an arrow symbol in a backward direction, and a target action requested to be performed by the pedestrian is also displayed next to the arrow symbol in the forward direction or the arrow symbol in the backward direction. For example, to raise a left hand is displayed next to the arrow symbol in the forward direction, and to raise a right hand is displayed next to the arrow symbol in the backward direction.

The dynamic graph information is a dynamic graph indicating that a pedestrian walks or a pedestrian does not walk. For example, in front of the pedestrian, the dynamic graph indicating that the pedestrian walks is a forward arrow symbol moving step by step, the dynamic graph indicating that the pedestrian does not walk is a backward arrow symbol moving step by step, and a target action requested to be performed by the pedestrian is also displayed next to the forward arrow symbol moving step by step or the backward arrow symbol moving step by step. For example, to raise a left hand is displayed next to the forward arrow symbol moving step by step, and to raise a right hand is displayed next to the backward arrow symbol moving step by step.

It may be understood that the static graph information or the dynamic graph information may be passing indication information in traffic signs, for example, a go-straight sign or a left turn sign. By using the passing indication information, the pedestrian may understand the target action requested to be performed in the first request information.

The video information is a video indicating that a pedestrian walks or a pedestrian does not walk. For example, in front of the pedestrian, the video indicating that the pedestrian walks is a motion picture, the video indicating that the pedestrian does not walk is a still picture, and a target action requested to be performed by the pedestrian is also displayed next to the motion picture or the still picture. For example, to raise a left hand is displayed next to the motion picture, and to raise a right hand is displayed next to the still picture.

It should be noted that to raise a right hand or to raise a left hand displayed next to the text information, the static graph information, the video information, or the dynamic graph information may be a text indicating to raise a left hand or raise a right hand or a motion picture indicating to raise a left hand or raise a right hand. This is not limited in this embodiment of this application.

It should be noted that, it is an example in which the target action requested to be performed by the pedestrian is to raise a left hand or to raise a right hand, or the target action may indicate the pedestrian to move leftward or rightward, or may be specified in another manner. This is not limited in this embodiment of this application.

It should be noted that, it is an example in which to raise a left hand indicates that the pedestrian walks and to raise a right hand indicates that the pedestrian does not walk, or to raise a left hand indicates that the pedestrian does not walk and to raise a right hand indicates that the pedestrian walks, or another manner may be specified. This is not limited in this embodiment of this application.

It should be noted that, the text that is included in the first request information and that indicates to walk or not walk may alternatively be represented by YES or NO, where YES indicates to walk, and NO indicates not to walk. Alternatively, another manner may be specified. This is not limited in this embodiment of this application.

In this embodiment of this application, the first module controls the target device in the vehicle to display the first request information in the target area. In a possible implementation, the first module may control, based on a specific trigger condition, the target device in the vehicle to display the first request information in the target area.

For example, during vehicle driving, if the trigger condition is emergency braking of the vehicle, the first module may control the target device to display the first request information in a ground area between the vehicle and the pedestrian. In this way, the pedestrian may perform the action based on the first request information, so that the first module may learn of the road participation intention of the pedestrian based on the action performed by the pedestrian. It may be understood that specific content of the trigger condition may be specified based on an actual application scenario. This is not limited in this embodiment of this application.

S802. The first module recognizes the action performed by the pedestrian.

In this embodiment of this application, in a possible implementation in which the first module recognizes the action performed by the pedestrian, the first module may recognize, by using the sensor, the action performed by the pedestrian.

For example, the sensor on the vehicle may obtain, by using a distance-speed based two-dimensional Fourier transform method, a distance-speed map corresponding to the pedestrian. The sensor detects, according to a constant false alarm algorithm, the distance-speed map to obtain a point cloud object detection result corresponding to the pedestrian, and then obtains angles of center-based objects of the pedestrian by using an angle Fourier transform. The sensor clusters the center-based objects into an object according to a clustering algorithm, so that the sensor tracks the pedestrian based on a plurality of frames of data according to a tracking algorithm. The sensor analyzes the plurality of frames of the pedestrian data by using a time-frequency analysis method such as short-time Fourier transform or wavelet transform, to recognize the action performed by the pedestrian.

It may be understood that an implementation in which the first module recognizes the action performed by the pedestrian may alternatively be specified based on an actual application scenario. This is not limited in this embodiment of this application.

It should be noted that, based on the first request information, the pedestrian may perform actions in a period of time. Therefore, the sensor on the vehicle also needs to continuously track and recognize the actions performed by the pedestrian in the period of time.

S803: The first module determines a driving policy of the vehicle based on a recognition result.

In this embodiment of this application, the recognition result may be that the pedestrian expresses the road participation intention of the pedestrian, or the recognition result may be that the pedestrian does not express the road participation intention of the pedestrian. In this way, the first module may determine different driving policies based on different recognition results.

When the recognition result is that the pedestrian expresses the road participation intention of the pedestrian, the first module may determine the driving policy of the vehicle based on the road participation intention of the pedestrian.

For example, when the first module recognizes that the pedestrian crosses the road, the first module may display the first request information in the target area. In addition, a text indicating the target action requested to be performed by the pedestrian in the first request information may be to raise a left hand or to raise a right hand, "walk" is displayed next to the text indicating to raise a left hand, and "not walk" is displayed next to the text indicating to raise a right hand, where "walk" indicates that the pedestrian continues to cross the road, and "not walk" indicates that the pedestrian stops on the road. When the action performed by the pedestrian is to raise a right hand, the first module may determine that the intention of the pedestrian is to stop on the road, or it may be understood that the driving policy of the vehicle determined by the first module is to continue to travel. It may be understood that an implementation in which the first module determines the driving policy of the vehicle may be specified based on an actual application scenario. This is not limited in this embodiment of this application.

When the recognition result is that the pedestrian does not express the road participation intention of the pedestrian, because the first module does not learn of the road participation intention of the pedestrian, the first module may execute a preset policy, so that the first module may determine the driving policy of the vehicle based on the preset policy.

For example, when the first module recognizes that the pedestrian crosses the road, the first module may display the first request information in the target area. In addition, a text indicating the target action requested to be performed by the pedestrian in the first request information may be to raise a left hand or to raise a right hand, and "walk" is displayed next to the text indicating to raise a left hand, and "not walk" is displayed next to the text indicating to raise a right hand, where "walk" indicates that the pedestrian continues to cross the road, and "not walk" indicates that the pedestrian stops on the road. However, if the action performed by the pedestrian is folded hands, the first module cannot determine the road participation intention of the pedestrian. Therefore, the first module may execute a preset policy of stopping the vehicle on the road, and the vehicle does not continue to travel until the pedestrian crosses the road. It may be understood that an implementation in which the first module determines the driving policy of the vehicle may alternatively be specified based on an actual application scenario. This is not limited in this embodiment of this application.

In conclusion, in this embodiment of this application, the first module controls the target device in the vehicle to display the first request information in the target area. In this way, the pedestrian may perform the action based on the first request information, and the first module may determine the driving policy of the vehicle by recognizing the action performed by the pedestrian. In this way, in the self-driving system, the vehicle may perform intention interaction with the pedestrian even without the participation of the driver, to avoid a traffic accident and further improving driving safety.

In the self-driving scenario of the vehicle, when the first module cannot recognize the intention of the pedestrian, the first module may control, based on a display manner of the first request information, the target device in the vehicle to display the first request information in the target area. For example, the display manner of the first request information includes one or more of the following: a display location of the first request information, a display angle of the first request information, display brightness of the first request information, a display color of the first request information, or duration for displaying the first request information. It may be understood that specific content of the display manner of the first request information may alternatively be specified based on an actual application scenario. This is not limited in this embodiment of this application.

The display location of the first request information is a specific location at which the first request information is displayed. The location may be an area outside the vehicle, for example, the ground, a building, or a vehicle body. The vehicle body may include at least one of a front windshield, a rear windshield, a vehicle window, and the like. The vehicle may be the current vehicle, or may be another vehicle. It may be understood that specific content of the display location of the first request information may alternatively be specified based on an actual application scenario. This is not limited in this embodiment of this application.

It should be noted that because the pedestrian is in front of the vehicle, when the vehicle displays the first request information on the rear windshield, the vehicle also needs to display the first request information on the front windshield. The first request information displayed on the front windshield is used to request the pedestrian to perform the target action, and the first request information displayed on the rear windshield may be used to remind another vehicle behind the vehicle. It may be understood that a specific implementation in which the vehicle displays the first request information on the front windshield and the rear windshield is not limited in this embodiment of this application.

The display angle of the first request information is an angle at which the first request information is displayed. From a perspective of the vehicle, the display angle of the first request information may be 60 degrees from the front of the vehicle to the right, or the like. From a perspective of the pedestrian, the display angle of the first request information may be directly in the front of the pedestrian, or the like. It may be understood that specific content of the display angle of the first request information may alternatively be specified based on an actual application scenario. This is not limited in this embodiment of this application.

The display brightness of the first request information is brightness for displaying the first request information. For example, a value of the brightness may be 50. In this way, the first request information may be highlighted by using the brightness, so that the pedestrian can see the first request information in a timely manner. It may be understood that a specific value of the display brightness of the first request information may be specified based on an actual application scenario. This is not limited in this embodiment of this application.

The display color of the first request information is a color for displaying the first request information. For example, the color may be red, green, or yellow. In this way, a color of the target area may be distinguished by using the first request information displayed in the color, so that the pedestrian can see the first request information in a timely manner. It may be understood that specific content of the display color of the first request information may be specified based on an actual application scenario. This is not limited in this embodiment of this application.

The duration for displaying the first request information is a period of time in which the first request information is displayed. For example, the duration is 10 seconds. In this way, in the duration, even if the pedestrian does not notice the first request information in the first 5 seconds, the pedestrian may notice the first request information in the last 5 seconds, so that the vehicle implements intention interaction with the pedestrian. It may be understood that a specific value of the duration for displaying the first request information may be specified based on an actual application scenario. This is not limited in this embodiment of this application.

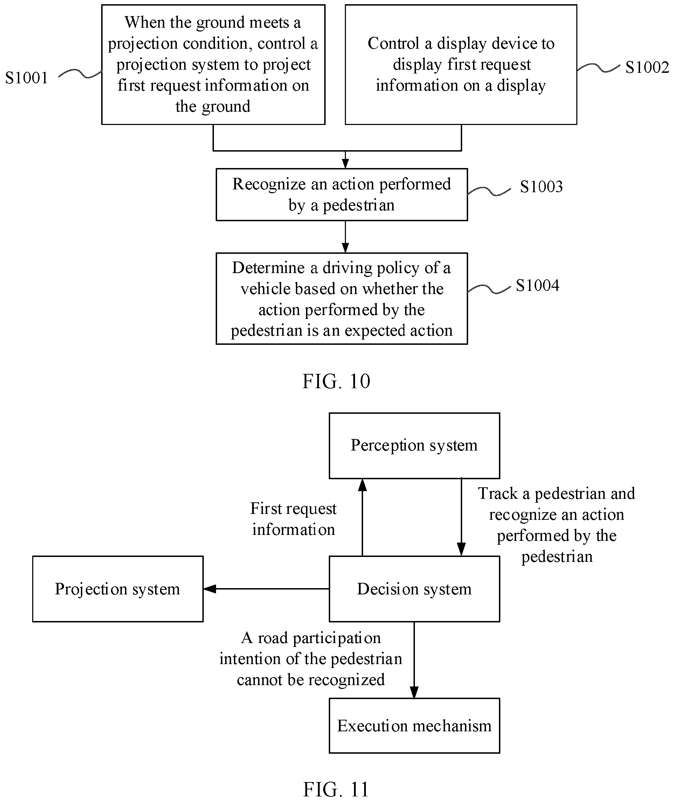

With reference to the foregoing descriptions, based on the embodiment shown in FIG. 8, for example, FIG. 10 is a schematic flowchart of a control method according to an embodiment of this application. In this embodiment of this application, the first request information includes indication information used to indicate an expected action, and the expected action is associated with the road participation intention of the pedestrian. Therefore, that the first module controls the target device in the vehicle to display the first request information in the target area may be understood as that when the target device is a projection system and the target area is the ground, the first module controls the projection system to project the first request information on the ground; or when the target device is a display device and the target area is a display, the first module controls the display device to display the first request information on the display. In this way, the first module can learn of the road participation intention of the pedestrian by recognizing the action performed by the pedestrian, so that the first module can determine the driving policy of the vehicle.

As shown in FIG. 10, the following steps may be included.

S1001: When the ground meets a projection condition, the first module controls the projection system to project the first request information on the ground.

In this embodiment of this application, the projection condition may be understood as that there is no water or snow. If there is water or snow on the ground, the first request information that the first module controls the projection system to display on the ground is fuzzy, so that the pedestrian cannot clearly see the first request information, and the pedestrian cannot express the road participation intention of the pedestrian. It may be understood that a specific implementation in which the first module determines that the ground meets the projection condition may be specified based on an actual application scenario. This is not limited in this embodiment of this application.

In this embodiment of this application, the projection system may be a system preinstalled in a vehicle by a manufacturer, or may be a system installed in a vehicle by a user. The first module may control the system to project the first request information on the ground. An implementation in which the first module controls the projection system to project the first request information on the ground is not limited in this embodiment of this application.

In this embodiment of this application, when the ground meets the projection condition, the first module controls the projection system to project the first request information on the ground. In a possible implementation, the first module may control, based on a movement direction of the pedestrian, the projection system to project the first request information on the ground when the ground meets the projection condition.

For example, during vehicle driving, the first module recognizes, based on a movement direction of the pedestrian, that a heading direction of the vehicle and the movement direction of the pedestrian are at a right angle, so that the first module determines that the pedestrian is ready to cross the road. Therefore, when there is no water on the ground, the first module may control, based on a display manner of the first request information, the projection system to project the first request information on the ground, or the projection system indicates the projection apparatus to project the first request information on the ground. A specific value of the angle between the heading direction of the vehicle and the movement direction of the pedestrian may alternatively be specified based on an actual application scenario. This is not limited in this embodiment of this application.

It may be understood that an implementation in which the first module controls the projection system to project the first request information on the ground may alternatively be specified based on an actual application scenario. This is not limited in this embodiment of this application.

S1002: The first module controls the display device to display the first request information on the display.

In this embodiment of this application, the display device may be a device pre-installed in the vehicle by a manufacturer, or may be a device installed in the vehicle by a user. For example, the display device may be an in-vehicle display. The display device may control the display. In this way, after the first request information is displayed on the display, the pedestrian may notice the first request information. In this way, the pedestrian may express the road participation intention of the pedestrian. The display may be a device preinstalled by a manufacturer outside the vehicle, or may be a device installed by a user outside the vehicle. For example, the display may be installed on the top of the vehicle.

It may be understood that an installation position of the display device and specific content of the display device may be specified based on an actual application scenario. This is not limited in this embodiment of this application. A size of the display and an installation position of the display may be specified based on an actual application scenario. This is not limited in this embodiment of this application.

In this embodiment of this application, for an implementation in which the first module controls the display device to display the first request information on the display, refer to the content descriptions in S1001. Details are not described herein again. It may be understood that an implementation in which the first module controls the display device to display the first request information on the display may alternatively be specified based on an actual application scenario. This is not limited in this embodiment of this application.

S1003: The first module recognizes the action performed by the pedestrian.

In this embodiment of this application, for content of S1003, refer to the content descriptions of S802. Details are not described herein again. It may be understood that a specific implementation in which the first module recognizes the action performed by the pedestrian may alternatively be specified based on an actual application scenario. This is not limited in this embodiment of this application.

S1004: The first module determines the driving policy of the vehicle based on whether the action performed by the pedestrian is the expected action.

In this embodiment of this application, because the expected action is associated with the road participation intention of the pedestrian, when the expected action includes a first expected action and a second expected action, the first module may learn of the road participation intention of the pedestrian based on whether the action performed by the pedestrian is the first expected action or the second expected action, so that the first module may determine the driving policy of the vehicle.

The first expected action is associated with a first road participation intention of the pedestrian, and the second expected action is associated with a second road participation intention of the pedestrian. For example, when the action performed by the pedestrian is the first expected action, the first road participation intention is that the pedestrian continues to walk at a next moment; and when the action performed by the pedestrian is the second expected action, the second road participation intention is that the pedestrian stops to wait at a next moment. Alternatively, when the action performed by the pedestrian is the first expected action, the first road participation intention is that the pedestrian stops to wait at a next moment; and when the action performed by the pedestrian is the second expected action, the second road participation intention is that the pedestrian continues to walk at a next moment.

For example, when the action performed by the pedestrian is raising the left hand, the action of raising the left hand is the same as the first expected action. Because the first road participation intention is that the pedestrian continues to walk at a next moment, the driving policy of the vehicle determined by the first module is stopping to wait at the next moment. When the action performed by the pedestrian is raising the right hand, the action of raising the right hand is the same as the second expected action. Because the second road participation intention is that the pedestrian stops to wait at a next moment, the driving policy of the vehicle determined by the first module is continuing to travel.

It may be understood that content of the road participation intention of the pedestrian indicated by the first expected action or the second expected action may alternatively be specified based on an actual application scenario. This is not limited in this embodiment of this application.

In this embodiment of this application, with reference to the system shown in FIG. 5, for example, FIG. 11 is a schematic diagram of intention interaction according to an embodiment of this application. It can be learned from FIG. 11 that when the decision system cannot recognize the road participation intention of the pedestrian, the decision system may activate the projection system based on the first request information, and control the projection system to project the first request information on the ground. Therefore, after the pedestrian performs the action based on the first request information, the decision system may indicate the perception system to perform targeted tracking on the pedestrian and recognize the action performed by the pedestrian, and the perception system determines whether the action performed by the pedestrian is the first expected action or the second expected action, so that the decision system may determine that the road participation intention of the pedestrian is the first road participation intention or the second road participation intention. In this way, the decision system may make a decision based on the first road participation intention or the second road participation intention of the pedestrian, and send a decision result to an execution mechanism. The execution mechanism may be a braking system, a steering system, or the like. For example, when the decision result is stopping to wait, the braking system controls the vehicle to stop.

In conclusion, in this embodiment of this application, when the ground meets the projection condition, the first module may control the projection system to project the first request information on the ground, or the first module controls the display device to display the first request information on the display. In this way, the first module recognizes the action performed by the pedestrian. Because the expected action is associated with the road participation intention of the pedestrian, the first module may determine the driving policy of the vehicle when the action performed by the pedestrian is the expected action. In this way, even without the participation of the driver, the pedestrian and the self-driving vehicle can effectively perform intention interaction with each other, so that the self-driving vehicle can effectively understand the road participation intention of the pedestrian, and further, the self-driving vehicle can make a correct driving decision. This is particularly important for road safety of the self-driving vehicle.

Based on the embodiment shown in FIG. 8, for example, FIG. 12 is a schematic flowchart of a control method according to an embodiment of this application. In this embodiment of this application, the first request information includes indication information used to indicate a plurality of expected actions, and the plurality of expected actions are associated with a plurality of road participation intentions of the pedestrian. In this way, the first module can learn of the road participation intention of the pedestrian by recognizing the actions performed by the pedestrian, and then the first module can determine the driving policy of the vehicle. As shown in FIG. 12, the following steps may be included.

S1201: The first module controls the target device in the vehicle to display the first request information in the target area.

In this embodiment of this application, the first request information includes the indication information used to indicate the plurality of expected actions, and the plurality of expected actions are associated with the plurality of road participation intentions of the pedestrian. For example, when the pedestrian crosses the road and the expected action is raising a left hand, the road participation intention is that the pedestrian continues to cross the road at a next moment; when the expected action is raising a right hand, the road participation intention is that the pedestrian stops to wait at a next moment; or when the expected action is raising both hands, the road participation intention is that the pedestrian runs to cross the road at a next moment. It may be understood that a specific correspondence between the expected action and the road participation intention may alternatively be specified based on an actual application scenario. This is not limited in this embodiment of this application.

S1202: The first module recognizes the action performed by the pedestrian.

In this embodiment of this application, because the first request information includes the plurality of expected actions, after the pedestrian performs an action, the first module may recognize the action performed by the pedestrian. When determining that the action performed by the pedestrian is different from any one of the plurality of expected actions, the first module may perform S1203.

For a specific implementation in which the first module recognizes the action performed by the pedestrian, refer to the content descriptions in S802. Details are not described herein again.

S1203: The first module controls, based on that the action performed by the pedestrian is not any one of the plurality of expected actions, the target device in the vehicle to display second request information in the target area.

In this embodiment of this application, after the vehicle displays the first request information, the first module finds, by recognizing the action performed by the pedestrian, that the action performed by the pedestrian is not any one of the plurality of expected actions, or finds that the pedestrian does not perform an action. Therefore, the first module cannot obtain the road participation intention of the pedestrian. To avoid invalid waiting, the decision system on the vehicle may indicate the projection system to switch projected content. To be specific, the first module controls the target device in the vehicle to display the second request information in the target area. Because the second request information is used to indicate the pedestrian to perform a first road participation behavior, the first module may directly notify, by using the displayed second request information, the pedestrian of an action that needs to be performed at a next moment, that is, the first road participation behavior performed by the pedestrian at the next moment. In this way, an invalid waiting time can be effectively reduced, and road passing efficiency can be increased.

The first road participation behavior may be stopping to wait, continuing to walk, walking to cross the road, running to cross the road, or the like. It may be understood that specific content of the first road participation behavior may alternatively be specified based on an actual application scenario. This is not limited in this embodiment of this application.

It may be understood that when that the pedestrian needs to perform the first road participation behavior at the next moment is displayed, the first module may also display an action that needs to be performed by the pedestrian. The first module may further determine a road participation behavior of the pedestrian at a next moment by recognizing the action. In this way, the first module may determine a driving intention of the vehicle.

In this embodiment of this application, the second request information includes text information, static graph information, video information, or dynamic graph information. It may be understood that specific content of the second request information may alternatively be specified based on an actual application scenario. This is not limited in this embodiment of this application.

In this embodiment of this application, the first module may control, based on a display manner of the second request information, the target device in the vehicle to display the second request information in the target area. The display manner of the second request information includes one or more of the following: a display location of the second request information, a display angle of the second request information, display brightness of the second request information, a display color of the second request information, or duration for displaying the second request information. For content of the display manner of the second request information, refer to content descriptions of the display manner of the first request information. Details are not described herein again. It may be understood that specific content of the display manner of the second request information may alternatively be specified based on an actual application scenario. This is not limited in this embodiment of this application.

According to the invention, the display manner of the second request information further includes a countdown. When the driving policy of the vehicle is stopping to wait, the countdown is a time used to remind the pedestrian to quickly pass the vehicle. When the driving policy of the vehicle is continuing to travel, the countdown is a time when the vehicle passes the pedestrian, that is, a time that the pedestrian needs to wait.

It may be understood that the static graph information or the dynamic graph information may alternatively be a warning sign. The warning sign is used to indicate a driving policy that is to be executed by the vehicle. For example, the warning sign is a go-straight traffic sign, and is used to indicate that the vehicle is about to travel. Specific content of the warning sign may be specified based on an actual application scenario. This is not limited in this embodiment of this application.

For example, FIG. 13 is a schematic diagram of second request information according to an embodiment of this application. In this embodiment of this application, a first road participation behavior is walking. As shown in FIG. 13, in front of a pedestrian, a vehicle controls a projection system to project an arrow symbol in a forward direction, and a text indicating the pedestrian to walk is displayed next to the symbol. Both the arrow symbol in a forward direction and the text indicating the pedestrian to walk show that the vehicle notifies the pedestrian that the pedestrian needs to walk at a next moment. In this case, the vehicle stops driving at the next moment. A number 5 displayed next to the arrow symbol in a forward direction may be understood as that a time for the pedestrian to pass the vehicle is 5 seconds, or is used to notify the pedestrian that the pedestrian needs to quickly pass the vehicle within the 5 seconds. In this way, the vehicle can only continue to travel after 5 seconds.

It may be understood that, in FIG. 13, in addition to the projection of the arrow symbol in a forward direction or the text indicating the pedestrian to walk, the vehicle may further project an action of raising a left hand. The action of raising a left hand indicates that the pedestrian needs to walk at a next moment. In this way, the vehicle may further determine, by recognizing the action of raising a left hand by the pedestrian, an intention of the pedestrian to walk at the next moment, so that the vehicle stops driving at the next moment.

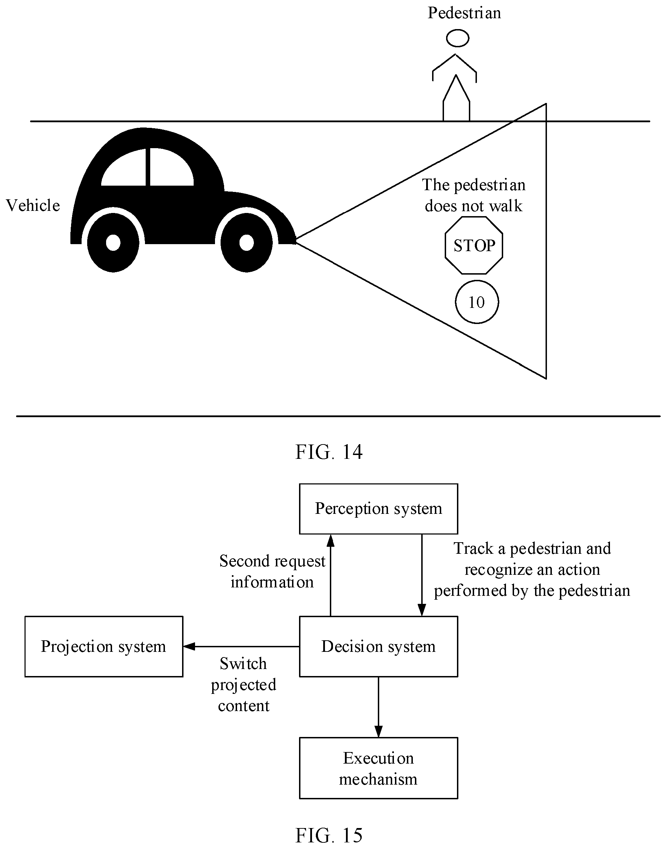

For example, FIG. 14 is a schematic diagram of second request information according to an embodiment of this application. In this embodiment of this application, a first road participation behavior is not walking. As shown in FIG. 14, in front of a pedestrian, a vehicle controls a projection system to project an English symbol of STOP, and a text indicating the pedestrian not to walk is displayed next to the symbol. Both the English symbol of STOP or the text indicating the pedestrian not to walk show that the pedestrian needs to stop at a next moment. In this case, the vehicle continues to travel at the next moment. A number 10 displayed next to the symbol STOP may be understood as that a time for the pedestrian to stop is 10 seconds, or is used to notify the pedestrian that the vehicle can quickly pass the pedestrian within the 10 seconds. In this way, the pedestrian can only continue to walk after 10 seconds.

It may be understood that, in FIG. 14, in addition to the projection of the English symbol of STOP or the text indicating the pedestrian not to walk, the vehicle may further project an action of raising a right hand. The action of raising a right hand indicates that the pedestrian needs to stop at a next moment. In this way, the vehicle may further determine, by recognizing the action of raising a right hand, an intention of the pedestrian to stop at the next moment, so that the vehicle continues to travel at the next moment.

It should be noted that, when the ground meets the projection condition, the target device is a projection system, and the target area is the ground, the first module may control the projection system to project the second request information on the ground; or when the target device is a display device and the target area is a display, the first module may control the display device to display the second request information on the display.

S1204: The first module determines the driving policy of the vehicle based on the first road participation behavior performed by the pedestrian.

In this embodiment of this application, after the first module displays the second request information, the pedestrian notices the second request information. Therefore, the pedestrian may perform the first road participation behavior based on the second request information. In this way, the first module may determine the driving policy of the vehicle.

It may be understood that, when the second request information is displayed, an action that needs to be performed by the pedestrian may also be displayed in the target area. In this way, the first module may further determine the road participation behavior of the pedestrian by continuously recognizing the action that needs to be performed by the pedestrian. For example, at a previous moment, the driving policy of the vehicle is stopping to wait, and the action that needs to be performed by the pedestrian and that is displayed in the target area is raising a left hand, reflecting that the pedestrian stops to wait at a next moment. Therefore, when the vehicle recognizes that the pedestrian raises the left hand and/or the pedestrian stops to wait, the vehicle may change from stopping to wait to driving.

In this embodiment of this application, with reference to the system shown in FIG. 5, for example, FIG. 15 is a schematic diagram of intention interaction according to an embodiment of this application. It can be learned from FIG. 15 that when the action performed by the pedestrian is not any one of the plurality of expected actions, the decision system may indicate the projection system to switch projected content. The projected content is the second request information. Because the second request information is used to indicate the pedestrian to perform the first road participation behavior, the perception system may track the pedestrian and recognize the road participation intention of the pedestrian again based on the second request information. Therefore, the decision system can determine the road participation intention of the pedestrian. Therefore, the decision system may make a decision based on the road participation intention of the pedestrian, and send a decision result to an execution mechanism. The execution mechanism may be a braking system, a steering system, or the like. For example, when the decision result is stopping to wait, the braking system controls the vehicle to stop.

It should be noted that, if a plurality of pedestrians on the roadside perform actions after the vehicle displays the second request information, when the vehicle cannot determine the road participation intention of the pedestrian, the vehicle may perform S1201 to S1204 until the vehicle determines the road participation intention of the pedestrian.

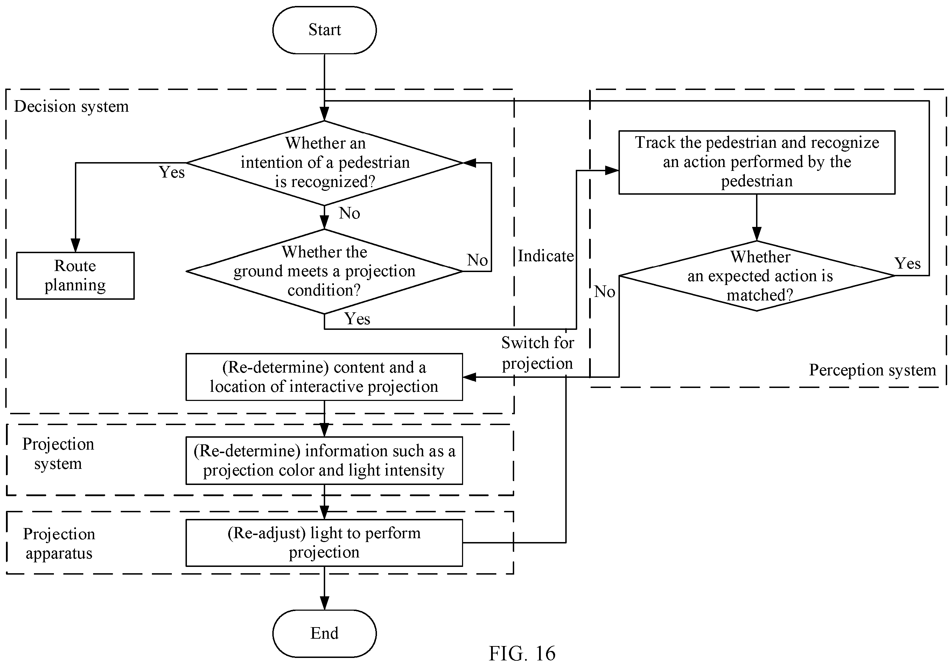

With reference to the embodiments shown in FIG. 8 to FIG. 15, for example, FIG. 16 is a schematic flowchart of a control method according to an embodiment of this application. As shown in FIG. 16, when the decision system recognizes the intention of the pedestrian, the decision system may perform route planning based on the intention of the pedestrian. When the decision system does not recognize the intention of the pedestrian, and the ground meets the projection condition, the decision system determines content and a location of interactive projection. Further, the decision system controls the projection system to determine information such as a projection color and light intensity, and further, the projection system indicates the projection apparatus to adjust the light for projection. In addition, the decision system indicates the perception system to track the pedestrian and recognize the action of the pedestrian. When the perception system recognizes that the action performed by the pedestrian matches the expected action, the perception system may send a matching result to the decision system, so that the decision system performs route planning based on the matching result. When the perception system recognizes that the action performed by the pedestrian does not match the expected action, the perception system may notify the decision system to switch projected content. In other words, the decision system re-determines content and a location of the interactive projection, the projection system re-determines information such as a projection color and light intensity, and the projection apparatus re-adjusts light to perform projection. In this way, based on the re-determined projected content, the perception system re-tracks the pedestrian and recognizes the action performed by the pedestrian. Further, when the perception system recognizes that the action performed by the pedestrian matches the expected action, the perception system sends the matching result to the decision system, and the decision system performs route planning based on the matching result.

It should be noted that, for content of adjusting the light, determining the content and the position of the interactive projection, and determining the information such as the projection color and the light intensity shown in FIG. 16, refer to content of the display manner of the first request information described in the foregoing embodiment. For content of re-adjusting the light, re-determining the content and the position of the interactive projection, and re-determining the information such as the projection color and the light intensity shown in FIG. 16, refer to content of the display manner of the second request information described in the foregoing embodiment. Details are not described herein again.

The foregoing describes the method in embodiments of this application with reference to FIG. 8 to FIG. 16. The following describes an apparatus that is provided in an embodiment of this application and that performs the foregoing method. A person skilled in the art may understand that the method and the apparatus may be mutually combined and referenced, and a control apparatus provided in this embodiment of this application may perform the foregoing control method.

An example in which each functional module is obtained through division based on each corresponding function is used below for description.

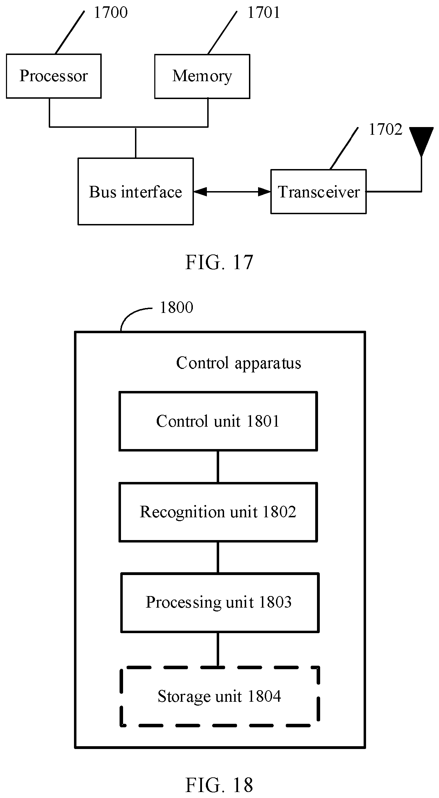

For example, FIG. 17 is a schematic diagram of a structure of a control apparatus according to an embodiment of this application. As shown in FIG. 17, the apparatus includes a processor 1700, a memory 1701, and a transceiver 1702.

The processor 1700 is responsible for managing a bus architecture and general processing. The memory 1701 may store data used when the processor 1700 performs an operation. The transceiver 1702 is configured to receive and send, under control of the processor 1700, data to perform data communication with the memory 1701.

The bus architecture may include any quantity of interconnected buses and bridges, and are specifically connected together by various circuits of one or more processors represented by the processor 1700 and a memory represented by the memory 1701. The bus architecture may further connect various other circuits such as a peripheral device, a voltage stabilizer, and a power management circuit. These are well known in the art, and therefore are not further described in this specification. The bus interface provides an interface. The processor 1700 is responsible for managing a bus architecture and general processing, and the memory 1701 may store data used when the processor 1700 performs an operation.

The procedure disclosed in the embodiments of this application may be applied to the processor 1700, or may be implemented by the processor 1700. During implementation, steps of the implementation process of the apparatus can be implemented by using a hardware integrated logical circuit in the processor 1700, or by using instructions in a form of software. The processor 1700 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory 1701, and the processor 1700 reads information in the memory 1701 and completes steps of a signal processing procedure in combination with hardware.

In this embodiment of this application, the processor 1700 is configured to read a program in the memory 1701, to perform the method procedure described in the foregoing embodiment.

For example, FIG. 18 is a schematic diagram of a structure of another control apparatus according to an embodiment of this application. The control apparatus provided in this embodiment of this application may be disposed in a vehicle. As shown in FIG. 18, the control apparatus 1800 may be used in a communication device, a circuit, a hardware component, or a chip. The control apparatus 1800 may include: a control unit 1801, a recognition unit 1802, and a processing unit 1803. The control unit 1801 is configured to support the control apparatus in performing an information control step, the recognition unit 1802 is configured to support the control apparatus in performing an information recognition step, and the processing unit 1803 is configured to support the control apparatus in performing an information processing step.

For example, the control unit 1801 is configured to control a target device in a vehicle to display first request information in a target area, where the first request information is used to request a pedestrian to perform a target action, the target action is used to express a road participation intention of the pedestrian, and the target area is within a visible range of the pedestrian; the recognition unit 1802 is configured to recognize the action performed by the pedestrian; and the processing unit 1803 is configured to determine a driving policy of the vehicle based on a recognition result.

In a possible implementation, the first request information includes indication information used to indicate an expected action, and the expected action is associated with the road participation intention; and the processing unit 1803 is specifically configured to determine the driving policy of the vehicle based on whether the action performed by the pedestrian is the expected action.

In a possible implementation, the expected action includes a first expected action and a second expected action, the first expected action is associated with a first road participation intention of the pedestrian, and the second expected action is associated with a second road participation intention of the pedestrian; and the processing unit 1803 is specifically configured to determine the driving policy of the vehicle based on whether the action performed by the pedestrian is the first expected action or the second expected action.

According to the invention, the first request information includes indication information used to indicate a plurality of expected actions, and the plurality of expected actions are associated with a plurality of road participation intentions; and the control unit 1801 is further configured to control, based on that the action performed by the pedestrian is not any one of the plurality of expected actions, the target device in the vehicle to display second request information in the target area, where the second request information is used to indicate the pedestrian to perform a first road participation behavior.

In a possible implementation, the processing unit 1803 is specifically configured to determine the driving policy of the vehicle based on the first road participation behavior performed by the pedestrian.

In a possible implementation, the second request information includes one or more of text information, static graph information, video information, or dynamic graph information.

In a possible implementation, the first request information includes one or more of text information, static graph information, video information, or dynamic graph information.

In a possible implementation, the target device is a projection system, and the target area is an area outside the vehicle.

In a possible implementation, the target area is the ground, and the processing unit 1803 is specifically configured to: when the ground meets a projection condition, control the projection system to project the first request information on the ground.

In a possible implementation, the target device is a display device, and the target area is a display; and the processing unit 1803 is specifically configured to control the display device to display the first request information on the display.

In a possible embodiment, the control apparatus may further include a storage unit 1804. The control unit 1801, the recognition unit 1802, the processing unit 1803, and the storage unit 1804 are connected through a communication bus.

The storage unit 1804 may include one or more memories. The memory may be a component that is configured to store a program or data and that is in one or more devices or circuits.

The storage unit 1804 may exist independently, and is connected to the processing unit 1804 of the control apparatus through the communication bus. Alternatively, the storage unit 1804 may be integrated with the control unit 1801, the recognition unit 1802, and the processing unit 1804.

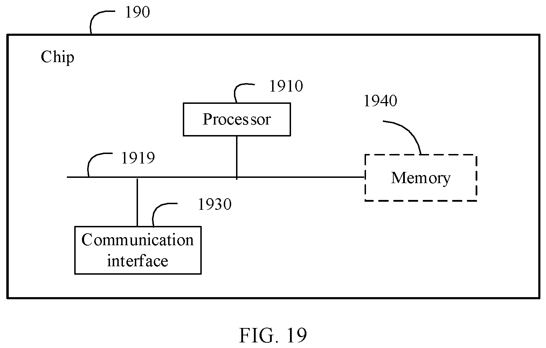

For example, FIG. 19 is a schematic diagram of a structure of a chip according to an embodiment of this application. The chip 190 includes at least one processor 1910 and a communication interface 1930. The communication interface 1930 is configured to input data from the outside to the chip 190, or output data from the chip 190 to the outside. The processor 1910 is configured to run a computer program or instructions, to implement the foregoing method embodiments.

Optionally, the chip 190 includes a memory 1940. In some implementations, the memory 1940 stores the following elements: an executable module or a data structure, or a subset thereof, or an extended set thereof.

In this embodiment of this application, the memory 1940 may include a read-only memory and a random access memory, and provide instructions and data for the processor 1910. A part of the memory 1940 may further include a non-volatile random access memory (non-volatile random access memory, NVRAM).

In this embodiment of this application, the processor 1910 may control, by invoking the operation instructions stored in the memory 1940, a decision system, a perception system, a projection system, or a projection apparatus to perform corresponding operations in the foregoing method embodiments.

For example, with reference to FIG. 5, the operation instructions stored in the memory 1940 may be instructions for controlling the decision system. In this way, the processor 1910 invokes the instructions from the memory 1940, so that the processor 1910 may control the decision system. In this way, the decision system may indicate the perception system to perceive pedestrian information, or the decision system may activate the projection system. Further, the projection system controls the projection apparatus to project first request information or second request information.

In this embodiment of this application, the memory 1940, the communication interface 1930, and the memory 1940 are coupled together through a bus system 1919. The bus system 1919 may further include a power bus, a control bus, a status signal bus, and the like, in addition to a data bus. For ease of description, various buses are marked as the bus system 1919 in FIG. 19.

The steps of the method disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a read-only memory, a programmable read-only memory, or an electrically erasable programmable read-only memory (electrically erasable programmable read-only memory, EEPROM). The storage medium is located in the memory 1940, and the processor 1910 reads information in the memory 1940 and completes the steps in the foregoing methods in combination with hardware of the processor.

In the foregoing embodiments, the instructions that are stored in the memory and that are to be executed by the processor may be implemented in a form of a computer program product. The computer program product may be written into the memory in advance, or may be downloaded and installed in the memory in a form of software.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid state drive, SSD)), or the like.

An embodiment of this application further provides a computer-readable storage medium. All or some of the methods described in the foregoing embodiments may be implemented by using software, hardware, firmware, or any combination thereof. The computer-readable medium may include a computer storage medium and a communication medium, and may further include any medium that can transfer a computer program from one place to another. The storage medium may be any target medium that can be accessed by a computer.

In a possible design, the computer-readable medium may include a compact disc read-only memory (compact disc read-only memory, CD-ROM), a RAM, a ROM, an EEPROM, or another optical disc memory; and the computer-readable medium may include a magnetic disk memory or another magnetic disk storage device. In addition, any connection line may also be appropriately referred to as a computer-readable medium. For example, if a coaxial cable, an optical fiber cable, a twisted pair, a DSL, or a wireless technology (such as infrared, radio, and microwave) is used to transmit software from a website, a server, or another remote source, the coaxial cable, the optical fiber cable, the twisted pair, the DSL, or the wireless technology such as infrared, radio, and microwave is included in a definition of a medium. The magnetic disk and the optical disc used in this specification include a compact disc (compact disc, CD), a laser disc, an optical disc, a digital versatile disc (digital versatile disc, DVD), a floppy disk, and a Blu-ray disc. The magnetic disk usually magnetically reproduces data, and the optical disc optically reproduces data by using laser light. The foregoing combinations also need to be included within the scope of the computer-readable medium.

## Claims

1. A control method, wherein the method comprises:
Controlling (S801, S1201) a target device in a vehicle to display first request information in a target area, wherein the first request information is used to request a pedestrian to perform a target action, the target action is used to express a road participation intention of the pedestrian, and the target area is within a visible range of the pedestrian;
recognizing (S802, S1202) an action performed by the pedestrian; and
determining (S803, S1204) a driving policy of the vehicle based on a recognition result, wherein the first request information comprises:
indication information used to indicate a plurality of expected actions, and the plurality of expected actions are associated with a plurality of road participation intentions; and
the method further comprises:
controlling (S1203), based on that the action performed by the pedestrian is not any one of the plurality of expected actions, the target device in the vehicle to display second request information in the target area, wherein the second request information is used to indicate the pedestrian to perform a first road participation behavior,
**characterized in that** a display manner of the second request information includes a countdown, wherein when the driving policy of the vehicle is stopping to wait, the countdown is a time used to remind the pedestrian to quickly pass the vehicle, and wherein when the driving policy of the vehicle is continuing to travel, the countdown is a time when the vehicle passes the pedestrian, that is, a time that the pedestrian needs to wait.

2. The method according to claim 1, wherein
the determining (S803, S1204) a driving policy of the vehicle based on a recognition result comprises:
determining the driving policy of the vehicle based on whether the action performed by the pedestrian is comprised in the plurality of expected actions.

3. The method according to claim 2, wherein the plurality of expected actions comprises a first expected action and a second expected action, the first expected action is associated with a first road participation intention of the pedestrian, and the second expected action is associated with a second road participation intention of the pedestrian; and
the determining (S803, S1204) a driving policy of the vehicle based on a recognition result comprises:
determining the driving policy of the vehicle based on whether the action performed by the pedestrian is the first expected action or the second expected action.

4. The method according to any of the previous claims, wherein the determining (S803, S1204) a driving policy of the vehicle based on a recognition result comprises:
determining the driving policy of the vehicle based on the first road participation behavior performed by the pedestrian.

5. The method according to any of the previous claims, wherein the second request information comprises one or more of text information, static graph information, video information, or dynamic graph information.

6. The method according to any one of claims 1 to 5, wherein the first request information comprises one or more of text information, static graph information, video information, or dynamic graph information.

7. The method according to claim 6, wherein the target device is a projection system, and the target area is an area outside the vehicle.

8. The method according to claim 7, wherein the target area is the ground, and the controlling a target device in a vehicle to display first request information in a target area comprises:
when the ground meets a projection condition, controlling the projection system to project the first request information on the ground.

9. The method according to claim 6, wherein the target device is a display device, and the target area is a display; and the controlling (S801, S1201) a target device in a vehicle to display first request information in a target area comprises:
controlling the display device to display the first request information on the display.

10. An apparatus, comprising units configured to perform the steps in the method according to any one of claims 1 to 9.

11. A computer-readable storage medium, comprising a program, wherein when the program is executed by a processor, the method according to any one of claims 1 to 9 is performed.

## Patentansprüche

1. Steuerungsverfahren, wobei das Verfahren Folgendes umfasst:
Steuern (S801, S1201) einer Zielvorrichtung in einem Fahrzeug, um erste Anforderungsinformationen in einem Zielbereich anzuzeigen, wobei die ersten Anforderungsinformationen verwendet werden, um einen Fußgänger aufzufordern, eine Zielaktion durchzuführen, die Zielaktion verwendet wird, um eine Absicht des Fußgängers zur Teilnahme am Straßenverkehr auszudrücken, und der Zielbereich innerhalb einer Sichtweite des Fußgängers liegt;
Erkennen (S802, S1202) einer durch den Fußgänger ausgeführten Aktion; und
Bestimmen (S803, S1204) einer Fahrrichtlinie des Fahrzeugs basierend auf einem Erkennungsergebnis, wobei die ersten Anforderungsinformationen Folgendes umfassen:
Anzeigeinformationen, die verwendet werden, um eine Vielzahl von erwarteten Aktionen anzuzeigen, und die Vielzahl von erwarteten Aktionen mit einer Vielzahl von Absichten zur Teilnahme am Straßenverkehr assoziiert ist; und
das Verfahren ferner Folgendes umfasst:
Steuern (S1203) der Zielvorrichtung in dem Fahrzeug, basierend darauf, dass die durch den Fußgänger ausgeführte Aktion keine beliebige der Vielzahl von erwarteten Aktionen ist, um zweite Anforderungsinformationen in dem Zielbereich anzuzeigen, wobei die zweiten Anforderungsinformationen verwendet werden, um den Fußgänger anzuweisen, ein erstes Verhalten zur Teilnahme am Straßenverkehr durchzuführen,
**dadurch gekennzeichnet, dass** eine Anzeigeart der zweiten Anforderungsinformationen einen Countdown beinhaltet, wobei, wenn die Fahrrichtlinie des Fahrzeugs das Anhalten zum Warten vorsieht, der Countdown eine Zeit ist, die verwendet wird, um den Fußgänger daran zu erinnern, das Fahrzeug schnell zu passieren, und wobei, wenn die Fahrrichtlinie des Fahrzeugs das Weiterfahren vorsieht, der Countdown eine Zeit ist, zu der das Fahrzeug den Fußgänger passiert, das heißt eine Zeit, die der Fußgänger warten muss.

2. Verfahren nach Anspruch 1, wobei
das Bestimmen (S803, S1204) einer Fahrrichtlinie des Fahrzeugs basierend auf einem Erkennungsergebnis Folgendes umfasst:
Bestimmen der Fahrrichtlinie des Fahrzeugs basierend darauf, ob die durch den Fußgänger durchgeführte Aktion in der Vielzahl der erwarteten Aktionen enthalten ist.

3. Verfahren nach Anspruch 2, wobei die Vielzahl der erwarteten Aktionen eine erste erwartete Aktion und eine zweite erwartete Aktion umfasst, die erste erwartete Aktion mit einer ersten Absicht des Fußgängers zur Teilnahme am Straßenverkehr assoziiert ist und die zweite erwartete Aktion mit einer zweiten Absicht des Fußgängers zur Teilnahme am Straßenverkehr assoziiert ist; und
das Bestimmen (S803, S1204) einer Fahrrichtlinie des Fahrzeugs basierend auf einem Erkennungsergebnis Folgendes umfasst:
Bestimmen der Fahrrichtlinie des Fahrzeugs basierend darauf, ob die durch den Fußgänger durchgeführte Aktion die erste erwartete Aktion oder die zweite erwartete Aktion ist.

4. Verfahren nach einem der vorhergehenden Ansprüche, wobei das Bestimmen (S803, S1204) einer Fahrrichtlinie des Fahrzeugs basierend auf einem Erkennungsergebnis Folgendes umfasst:
Bestimmen der Fahrrichtlinie des Fahrzeugs basierend auf dem ersten Verhalten zur Teilnahme am Straßenverkehr, das durch den Fußgänger durchgeführt wird.

5. Verfahren nach einem der vorhergehenden Ansprüche, wobei die zweiten Anforderungsinformationen eine oder mehrere von Textinformationen, statischen Grafikinformationen, Videoinformationen oder dynamischen Grafikinformationen umfassen.

6. Verfahren nach einem der Ansprüche 1 bis 5, wobei die ersten Anforderungsinformationen eine oder mehrere von Textinformationen, statischen Grafikinformationen, Videoinformationen oder dynamischen Grafikinformationen umfassen.

7. Verfahren nach Anspruch 6, wobei die Zielvorrichtung ein Projektionssystem ist und der Zielbereich ein Bereich außerhalb des Fahrzeugs ist.

8. Verfahren nach Anspruch 7, wobei der Zielbereich der Boden ist, und das Steuern einer Zielvorrichtung in einem Fahrzeug zum Anzeigen von ersten Anforderungsinformationen in einem Zielbereich Folgendes umfasst:
wenn der Boden eine Projektionsbedingung erfüllt, Steuern des Projektionssystems, um die ersten Anforderungsinformationen auf den Boden zu projizieren.

9. Verfahren nach Anspruch 6, wobei die Zielvorrichtung ein Anzeigevorrichtung ist und der Zielbereich eine Anzeige ist; und das Steuern (S801, S1201) einer Zielvorrichtung in einem Fahrzeug zum Anzeigen von ersten Anforderungsinformationen in einem Zielbereich Folgendes umfasst:
Steuern der Anzeigevorrichtung, um die ersten Anforderungsinformationen auf der Anzeige anzuzeigen.

10. Einrichtung, umfassend Einheiten, die dazu konfiguriert sind, die Schritte in dem Verfahren nach einem der Ansprüche 1 bis 9 durchzuführen.

11. Computerlesbares Speichermedium, umfassend ein Programm, wobei, wenn das Programm durch einen Prozessor ausgeführt wird, das Verfahren nach einem der Ansprüche 1 bis 9 durchgeführt wird.

## Revendications

1. Procédé de commande, dans lequel le procédé comprend :
la commande (S801, S1201) d'un dispositif cible dans un véhicule pour afficher de premières informations de demande dans une zone cible, dans lequel les premières informations de demande sont utilisées pour demander à un piéton de réaliser une action cible, l'action cible est utilisée pour exprimer une intention de participation à la route du piéton, et la zone cible est dans une portée visible du piéton ;
la reconnaissance (S802, S1202) d'une action réalisée par le piéton ; et
la détermination (S803, S1204) d'une politique de conduite du véhicule sur la base d'un résultat de reconnaissance, dans lequel les premières informations de demande comprennent :
des informations d'indication utilisées pour indiquer une pluralité d'actions attendues, et la pluralité d'actions attendues sont associées à une pluralité d'intentions de participation à la route ; et
le procédé comprend également :
la commande (S1203), sur la base du fait que l'action réalisée par le piéton n'est pas l'une quelconque de la pluralité d'actions attendues, du dispositif cible dans le véhicule pour afficher de secondes informations de demande dans la zone cible, dans lequel les secondes informations de demande sont utilisées pour indiquer au piéton de réaliser un premier comportement de participation à la route,
**caractérisé en ce qu'**un mode d'affichage des secondes informations de demande comporte un compte à rebours, dans lequel lorsque la politique de conduite du véhicule s'arrête pour attendre, le compte à rebours est un temps utilisé pour rappeler au piéton de dépasser rapidement le véhicule, et dans lequel lorsque la politique de conduite du véhicule est de continuer de rouler, le compte à rebours est un temps pendant lequel le véhicule dépasse le piéton, c'est-à-dire, un temps pendant lequel le piéton doit attendre.

2. Procédé selon la revendication 1, dans lequel
la détermination (S803, S1204) d'une politique de conduite du véhicule sur la base d'un résultat de reconnaissance comprend :
la détermination de la politique de conduite du véhicule sur la base du fait que l'action réalisée par le piéton est comprise dans la pluralité d'actions attendues ou non.

3. Procédé selon la revendication 2, dans lequel la pluralité d'actions attendues comprend une première action attendue et une seconde action attendue, la première action attendue est associée à une première intention de participation à la route du piéton, et la seconde action attendue est associée à une seconde intention de participation à la route du piéton ; et
la détermination (S803, S1204) d'une politique de conduite du véhicule sur la base d'un résultat de reconnaissance comprend :
la détermination de la politique de conduite du véhicule sur la base du fait que l'action réalisée par le piéton est la première action attendue ou la seconde action attendue.

4. Procédé selon l'une quelconque des revendications précédentes, dans lequel la détermination (S803, S1204) d'une politique de conduite du véhicule sur la base d'un résultat de reconnaissance comprend :
la détermination de la politique de conduite du véhicule sur la base du premier comportement de participation à la route réalisé par le piéton.

5. Procédé selon l'une quelconque des revendications précédentes, dans lequel les secondes informations de demande comprennent une ou plusieurs des informations de texte, des informations graphiques statiques, des informations vidéo, ou des informations graphiques dynamiques.

6. Procédé selon l'une quelconque des revendications 1 à 5, dans lequel les premières informations de demande comprennent une ou plusieurs des informations de texte, des informations graphiques statiques, des informations vidéo, ou des informations graphiques dynamiques.

7. Procédé selon la revendication 6, dans lequel le dispositif cible est un système de projection, et la zone cible est une zone à l'extérieur du véhicule.

8. Procédé selon la revendication 7, dans lequel la zone cible est le sol, et la commande d'un dispositif cible dans un véhicule pour afficher de premières informations de demande dans une zone cible comprend :
lorsque le sol répond à une condition de projection, la commande du système de projection pour projeter les premières informations de demande sur le sol.

9. Procédé selon la revendication 6, dans lequel le dispositif cible est un dispositif d'affichage, et la zone cible est un écran ; et la commande (S801, S1201) d'un dispositif cible dans un véhicule pour afficher de premières informations de demande dans une zone cible comprend :
la commande du dispositif d'affichage pour afficher les premières informations de demande sur l'écran.

10. Appareil, comprenant des unités configurées pour réaliser les étapes du procédé selon l'une quelconque des revendications 1 à 9.

11. Support de stockage lisible par ordinateur, comprenant un programme, dans lequel lorsque le programme est exécuté par un processeur, le procédé selon l'une quelconque des revendications 1 à 9 est réalisé.
